# EUROPÄISCHE PATENTSCHRIFT

(11) **EP 3 153 552 B1**
(45) Veröffentlichungstag und Bekanntmachung des Hinweises auf die Patenterteilung: **20.01.2021**
(21) Anmeldenummer: 15189174.4
(22) Anmeldetag: 09.10.2015
(51) Int. Cl.: C09D 5/10, C09D 7/61, C23C 2/26, C23C 28/00, C25D 5/48, B05D 7/00, C23F 13/06, C23F 13/14

(54) **KORROSIONSSCHUTZBESCHICHTUNG**
ANTI-CORROSION COATING
REVÊTEMENT DE PROTECTION CONTRE LA CORROSION

(43) Veröffentlichungstag der Anmeldung: 12.04.2017
(73) Patentinhaber: EWALD DÖRKEN AG, 58313 Herdecke (DE)
(72) Erfinder: Roth, Marcel, 40589 Düsseldorf (DE); Owczarek, Kai, 58313 Herdecke (DE); Mertens, Heike, 58097 Hagen (DE); Böhm, Sandra, 58256 Ennepetal (DE); Kurze, Vanessa, 58455 Witten (DE); Reusmann, Gerhard, 45259 Essen (DE)
(74) Vertreter: Von Rohr Patentanwälte Partnerschaft mbB

(56) Entgegenhaltungen:
- WO-A1-2010/043708
- DE-A1-102012 005 806
- FR-A1- 2 799 211
- US-A- 4 487 815

## Beschreibung

Die vorliegende Erfindung betrifft das technische Gebiet des Korrosionsschutzes, insbesondere des Korrosionsschutzes metallischer Substrate bei und nach Temperaturbelastung.

Insbesondere betrifft die vorliegende Erfindung eine Beschichtung, insbesondere eine Hochtemperatur-Korrosionsschutzbeschichtung, zur Erzeugung eines kathodischen Hochtemperaturkorrosionsschutzes auf einem metallischen Substrat.

Weiterhin betrifft die vorliegende Erfindung ein Verfahren zur Herstellung einer Hochtemperatur-Korrosionsschutzbeschichtung auf einem metallischen Substrat.

Korrosionserscheinungen an Metallen werden auf allen Gebieten der Technik beobachtet und sind von großer Bedeutung, da die Haltbarkeit bzw. Einsatzdauer von Maschinen, Fahrzeugen, Industrieanlagen oder auch Gebäuden oftmals in entscheidendem Maße von den Korrosionseigenschaften der verwendeten Metalle abhängig ist. Korrosion führt dazu, dass Metallteile ersetzt oder instandgesetzt werden müssen, was stets mit einem Aufwand an Zeit, Material und Kosten verbunden ist.

Gemäß DIN EN ISO 8044 ist Korrosion die physikochemische Wechselwirkung zwischen einem Metall und seiner Umgebung, die zu einer Veränderung der Eigenschaften des Metalls führt und die zu erheblichen Beeinträchtigungen der Funktionen des Metalls, der Umgebung oder des technischen Systems, in welchem die Metalle verwendet werden, führen kann. Bei der Korrosion von Metallen handelt es sich in der Regel um elektrochemische Vorgänge, nämlich die Oxidation von Metallen durch Sauerstoff gegebenenfalls in Gegenwart wässriger Elektrolytlösungen unter Ausbildung von Metalloxidschichten.

Da Korrosionsvorgänge die Haltbarkeit bzw. Einsatzzeit von Metallen bzw. Metallbauteilen oftmals bestimmen, ist es notwendig, die Korrosionsanfälligkeit und Korrosionsgeschwindigkeit von Metallen zu verringern. Um Metalle vor Korrosion zu schützen, werden einerseits passive Systeme - zum Beispiel Beschichtungen, wie Schutzlacke - eingesetzt, welche das Metall vor Umwelteinflüssen und somit vor Korrosion schützen sollen. Andererseits werden auch aktive Systeme verwendet, bei welchen das zu schützende Metallteil unter Ausnutzung elektrochemischer Vorgänge als Kathode fungiert und somit eine Oxidation des Metalls bzw. gebildete Metallionen umgehend reduziert werden. Dieser kathodische Korrosionsschutz kann einerseits durch Anlegung einer äußeren elektrischen Spannung erhalten werden, es ist andererseits jedoch auch möglich, das zu schützende Metallteil mit einem unedleren Metall, d. h. mit niedrigerem elektrochemischen Standardpotential, elektrisch in Kontakt zu bringen. Die beiden Metalle bilden ein elektrochemisches System, bei welchem das unedlere Metall die Anode, die sogenannte Opferanode, darstellt und oxidiert wird, während das edlere Metall die Kathode ist, an welcher reduziert wird.

Eine spezielle Form des kathodischen Korrosionsschutzes ist die Beschichtung der zu schützenden Metallteile mit einem im Vergleich zum zu schützenden Metall unedleren Metall. Eine besonders weit verbreitete Form der Beschichtung von Metallen, insbesondere von Stahlblechen, ist die Verzinkung. Bei der Verzinkung wird üblicherweise Stahl, insbesondere Stahlbleche, durch Eintauchen in Bäder aus geschmolzenem Zink im Rahmen der sogenannten Feuerverzinkung mit elementarem Zink beschichtet, wodurch feuerverzinkte Stahlbleche - auch HDGS (**h**ot **d**ipped **g**alvanized **s**teel) genannt - erhalten werden.

Eine weitere, weit verbreitete Möglichkeit der Verzinkung ist die elektrolytische oder galvanische Verzinkung, bei welcher Stahlbleche bzw. Stahlbauteile durch Anlegung einer äußeren Spannung in einem Zinkionen enthaltenden Elektrolytbad mit einer Zinkschicht überzogen werden.

Beide vorgenannten Verfahren führen zu gleichmäßigen und dauerhaften Zinkschichten, welche die Lebensdauern der Metallbauteile beträchtlich erhöhen können, weisen jedoch unter bestimmten Anwendungsbedingung eine Reihen von Nachteilen auf.

Bei höherfesten Stählen kann die Entstehung von Wasserstoff im galvanischen Prozess aufgrund einer möglichen Wasserstoffversprödung nachteilig sein. Komplexe Geometrien oder zu beschichtendes Schüttgut wiederum können nicht ohne Nachteile feuerverzinkt werden, da z. B. schöpfende Bereiche im Zink gefüllt oder feinstrukturierte Oberflächenmorphologien mit Zink zugesetzt würden.

Darüber hinaus zeigen Beschichtungen aus reinem elementarem Zink unter Temperaturbelastung keine befriedigenden Ergebnisse, die einerseits dem geringen Schmelzpunkt des Zinks von ca. 420 °C und andererseits der beschleunigten Oxidation des Zinks zu Zinkoxid durch Luftsauerstoff bereits bei Temperaturen weit unterhalb des Schmelzpunktes geschuldet sind.

Um zumindest einige Nachteile von feuerverzinkten bzw. galvanisch verzinkten Metallteilen zu vermeiden, werden in der Praxis oftmals sogenannte Zinklamellenüberzüge eingesetzt. Zinklamellenüberzüge enthalten Zinklamellen, d. h. plättchenförmige Zinkpigmente, in einem überwiegend anorganischen Bindemittel. Die Mischung aus Bindemittel und Zinklamellen wird üblicherweise als Dispersion auf das zu schützende Metallteil aufgebracht und das Bindemittel anschließend vernetzt, wodurch eine geschlossene homogene Schicht mit einer Stärke von 5 bis 15 µm erhalten wird. Zinklamellenüberzüge weisen trotz Einbettung der Zinkpartikel in eine Bindemittelmatrix elektrische Leitfähigkeit auf und gewährleisten einen hohen kathodischen Schutz, insbesondere zeigen Zinklamellenüberzüge im Salzsprühtest am Ritz gemäß DIN EN ISO 9227 gegenüber galvanisch bzw. elektrolytisch verzinkten Metallteilen eine deutlich verbesserte Korrosionsbeständigkeit.

Zinklamellenüberzüge bestehen üblicherweise aus einer überwiegend anorganischen Matrix aus Siliciumdioxid oder Titandioxid, in welche die Zinklamellen eingebettet sind. Typische Zinklamellenüberzüge, welche in Form der entsprechenden Beschichtungszusammensetzung, auch Zinklamellen-Primer genannt, auf ein Substrat aufgebracht werden, sind beispielsweise in der WO 2007/130838 A2 beschrieben.

Die mit galvanischer Verzinkung, Schmelztauchverzinkung oder Zinklamellenüberzügen erhaltenen Beschichtungen schützen unter normalen Bedingungen in hohem Maße gegen Korrosion, jedoch ist der kathodische Korrosionsschutz durch Zink-überzüge, insbesondere Zinklamellenüberzüge, bei erhöhten Temperaturen schon nach kurzer Temperaturbelastungen stark verringert oder bricht sogar vollkommen ein. So zeigen beispielsweise Stahlbleche, welche mit einem Zinklamellen-Primer behandelt wurden, nach einer Temperaturbelastung von 200 °C über einen Zeitraum von mehreren Stunden oder einer kurzzeitigen Temperaturbelastung von 300 °C in einem anschließend durchgeführten Salzsprühtest am Ritz gemäß DIN EN ISO 9227 keinen oder zumindest keinen ausreichenden Korrosionsschutz mehr, was auf die Oxidation von Zink zu nicht kathodisch schützendem Zinkoxid zurückzuführen ist.

Es hat daher im Stand der Technik nicht an Versuchen gefehlt die Temperaturbeständigkeit von Zinkbeschichtungen zu erhöhen. So werden teilweise Beschichtungen aus Zinklegierungen, welche größere Anteile an Mangan enthalten, verwendet, um ein kurzzeitiges Aufheizen von beschichteten Stahlteilen auf Temperaturen von 900 °C für nachfolgende Warmumformprozesse zu ermöglichen, ohne dass der kathodische Korrosionsschutz verloren geht. Die Verwendung größerer Mengen an Mangan macht dieses Verfahren jedoch kostenintensiv. Darüber hinaus widersteht diese Art des kathodischen Korrosionsschutzes nur kurzfristigen Temperaturbelastungen. Langfristig kann bei erhöhten Temperaturen kein kathodischer Korrosionsschutz aufrechterhalten werden.

Die Temperaturbeständigkeit zinkhaltiger Beschichtungen kann durch sogenannte Galvannealed-Verfahren, bei welchen erst eine Zinkschicht auf ein Stahlsubstrat aufgebracht und durch anschließendes Tempern definierte Eisen-Zink-Legierungen auf der Oberfläche des Substrates erhalten werden. Eisen-Zink-Legierungen sind unempfindlicher gegen sowohl Temperaturbelastung als auch mechanische Beanspruchung als reine Zinkbeschichtungen, allerdings zeigen sie rasch oberflächlichen Rotrost, welcher eine aufwendige Reinigung bei nachfolgender Beschichtung erforderlich macht. Aufgrund der Anfälligkeit gegenüber Rotrost weisen Galvannealed-Stahlsubstrate eine optisch wenig ansprechende Oberfläche, so dass Anwendungen im sichtbaren Bereich ohne weitere Beschichtung oftmals ausscheiden. Ein weiterer Nachteil der Galvannealed-Beschichtungen ist, dass die Erzeugung der Eisen-Zink-Legierung technisch und energetisch aufwändig ein einer Schutzgasatmosphäre erfolgt und die Beschichtungen bei höher Temperatur auch verstärkter Korrosion - wenngleich geringer als bei reinem Zink - neigt.

Die DE 10 2012 005 806 A1 beschreibt ein zweischichtiges Beschichtungssystem, mit einer ersten Zinkpartikel aufweisenden Schicht und einer darüber liegenden zweiten Aluminiumpartikel aufweisenden Schicht. Beide Schichten enthalten epoxydmodifizierte Alkoxysilane als Bindemittel. Durch Wahl geeigneter Katalysatoren soll das gleichzeitige Aushärten beider Schichten erreicht werden, wodurch gut haftende Beschichtungen mit kathodischen Korrosionsschutzeigenschaften erhalten werden sollen. Aber auch diese Beschichtung widersteht lediglich einer kurzzeitigen Temperaturbelastung von ca. 300 °C, ohne dass der kathodische Korrosionsschutz dramatisch verringert wird bzw. einbricht.

Die WO 2010/043708 A1 betrifft ein Verfahren zum elektrochemischen Korrosionsschutz einer metallischen Oberfläche eines Werkstücks durch Aufbringen und Aushärten einer ein- oder mehrschichtigen Beschichtung mit einer dem Werkstück zugewandten Grenzfläche und mit einer dem Werkstück abgewandten Grenzfläche.

Hierbei werden ein oder mehrere Basecoats, jeweils aufweisend mindestens ein Bindemittel und metallische Partikel, schichtweise aufgebracht. Um Maßnahmen zum effizienten Einsatz von Metallpartikeln zum Korrosionsschutz in bindemittelhaltigen Beschichtungen vorzuschlagen, ist es vorgesehen, dass der elektrochemische Korrosionsschutz bereitgestellt wird durch eine Beschichtung mit einer Metallpartikelkonzentration und/oder eine Metallpartikelzusammensetzung, die sich an der dem Werkstück zugewandten Grenzfläche von der an der dem Werkstück abgewandten Grenzfläche unterscheidet.

Die FR 2 799 211 A1 betrifft ein Verfahren zur Herstellung einer antikorrosiven Beschichtung für Metallteile, welche frei von Chrom und chrombasierte Derivaten, insbesondere frei von Chrom(VI)-Verbindungen, ist. Die Beschichtung wird vorzugsweise in dünnen Schichten aufgetragen und soll einen hocheffizienten Korrosionsschutz gewährleisten. Die Beschichtung besteht aus einer ersten metallischen Zinkschicht und einer oder mehreren darauf aufgebrachten Beschichtungen auf Basis einer wässrigen Zusammensetzung, welche ein partikelförmiges Metall, ein geeignetes Lösemittel, einen Verdicker und ein Bindemittel auf Basis eines Silans enthält.

Die US 4 487 815 A betrifft temperaturbeständige Substrate und insbesondere Metalle, wie beispielsweise eisenhaltige Metalle, welche zu Zwecken des Korrosionsschutzes mit Beschichtungen versehen sind, welche partikelförmiges Metall mit einem substantiellen Anteil an fein verteiltem Aluminium, eine Chrom(VI)-Verbindungen bereitstellende Substanz und Borsäure enthält. Als Deckbeschichtung für die zuvor genannte Zusammensetzung wird eine Beschichtung auf Basis eines Silikats verwendet.

Es fehlt somit im Stand der Technik an einem geeigneten aktiven Korrosionsschutz insbesondere auf Basis eines Zinküberzuges, welcher auch bei länger andauernder Temperaturbelastung und im Anschluss an eine solche Temperaturbelastung eine kathodische Korrosionsschutzwirkung beibehält. Eine derartige hochtemperaturbeständige Korrosionsschutzbeschichtung könnte beispielsweise die Haltbarkeit bzw. Einsatzzeit von Metallteilen in Motoren, Auspuffanlagen, Verschraubungen in temperaturbelasteten Bereichen, Anlagen der Energiegewinnung oder Industrieanlagen deutlich erhöhen.

Der vorliegenden Erfindung liegt daher die Aufgabe zugrunde, eine Hochtemperaturkorrosionsschutzbeschichtung zur Verfügung zu stellen, wobei die zuvor geschilderten, im Zusammenhang mit im Stand der Technik auftretenden, Probleme und Nachteile zumindest weitgehend vermieden oder aber wenigstens abgeschwächt werden sollen.

Eine weitere Aufgabe der vorliegenden Erfindung ist es, eine Beschichtung bereitzustellen, welche einen hohen Korrosionsschutz, insbesondere einen kathodischen Korrosionsschutz, bei einer länger andauernder Temperaturbelastung oder intervallartiger Temperaturbelastung ermöglicht. Insbesondere soll gewährleistet sein, dass die Beschichtung im Anschluss an eine Temperaturbelastung im Salzsprühtest am Ritz gemäß DIN EN ISO 9227 immer noch hervorragende Ergebnisse liefert.

Schließlich ist eine weitere Aufgabe der vorliegenden Erfindung ist darin zu sehen, eine Beschichtung bereitzustellen, welche für eine Vielzahl von Anwendungen flexibel einsetzbar ist und dabei einen hervorragenden Hochtemperaturkorrosionsschutz ermöglicht.

Gegenstand der vorliegenden Erfindung gemäß einem ersten Aspekt der vorliegenden Erfindung ist eine Beschichtung, insbesondere HochtemperaturKorrosionsschutzbeschichtung, zur Erzeugung eines kathodischen Hochtemperaturkorrosionsschutzes nach Anspruch 1; weitere vorteilhafte Ausgestaltungen dieses Erfindungsaspektes sind Gegenstand der diesbezüglichen Unteransprüche.

Darüber hinaus ist Gegenstand der vorliegenden Erfindung gemäß einem zweiten Aspekt der vorliegenden Erfindung ein Verfahren zur Herstellung einer Hochtemperatur-Korrosionsschutzbeschichtung auf einem metallischen Substrat nach Anspruch 10.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit eine Beschichtung, insbesondere eine Hochtemperatur-Korrosionsschutzbeschichtung, zur Erzeugung eines kathodischen Hochtemperaturkorrosionsschutzes auf einem metallischen Substrat, aufweisend mindestens zwei Schichten, wobei die Beschichtung
(a) eine erste Schicht in Form einer kathodischen Korrosionsschutzbeschichtung, wobei die erste Schicht
   (i) auf Basis einer durch Elektrolyse oder Feuerverzinkung aufgebrachten Zinkschicht ausgebildet ist oder
   (ii) auf Basis mindestens einer Metallpartikel enthaltenden anorganisch basierten Matrix ausgebildet ist, wobei die erste Schicht (3) einen Anteil an Metallpartikeln im Bereich von 50 bis 95 Gew.-%, bezogen auf die erste Schicht, aufweist, wobei die anorganisch basierte Matrix Oxide des Siliciums, Titans und/oder Zirkoniums enthält, wobei die Matrix mittels organischer Reste modifiziert ist, wobei die anorganisch basierte Matrix durch Kondensationsreaktionen anorganischer oder organischer Gruppen und/oder Polymerisations-reaktionen organischer Gruppen aus Silanen, Polysilanen, Silanhydrolysaten, Polysiloxanen, Silikonaten, Titanaten, Polytitanaten, Zirkonaten und deren Mischungen erhältlich ist,
   und
(b) eine zweite Schicht in Form einer weiteren Korrosionsschutzbeschichtung in Form einer Sauerstoffbarrierebeschichtung, wobei die zweite Schicht eine anorganisch basierte Matrix aufweist, wobei die anorganisch basierte Matrix durch Oxide des Siliciums, Titans und/oder Zirkoniums gebildet wird, wobei die zweite Schicht Metallpartikel enthält, wobei die zweite Schicht einen Anteil an Metallpartikeln im Bereich von 35 bis 95 Vol.-%, bezogen auf die zweite Schicht, aufweist und wobei die Metallpartikel Aluminiumpartikel sind,
aufweist.

Im Rahmen der vorliegenden Erfindung ist es somit möglich, durch eine Beschichtung, welche eine kathodische Korrosionsschutzschicht und eine weitere Korrosionsschutzschicht in Form einer Sauerstoffbarriereschicht aufweist, einen kathodischen Hochtemperaturkorrosionsschutz bereitzustellen, durch welchen das metallische Substrat nicht nur während der Temperaturbelastung geschützt wird, sondern welcher darüber hinaus im Anschluss an Temperaturbelastungen seine kathodische Schutzwirkung nicht verliert, und dies auch bei wiederholter Temperaturbelastung. Die erfindungsgemäße Beschichtung ermöglicht somit nicht nur einen kathodischen Korrosionsschutz bei länger anhaltender Temperaturbelastung, sondern vielmehr auch bei intervallartiger Temperaturbelastung, wie sie beispielsweise bei Motoren von Kraftfahrzeugen auftritt.

Unter einer Sauerstoffbarriereschicht ist dabei im Rahmen der vorliegenden Erfindung eine Korrosionsschutzschicht bzw. Korrosionsschutzbeschichtung zu verstehen, welche Metalle, insbesondere Eisen und/oder Stahl, vor Oxidation durch Gase, insbesondere Sauerstoff, schützt, und zwar vorzugsweise bei erhöhten Temperaturen. Insbesondere wird das Eindringen des zur Oxidation des Substrats und der kathodisch schützenden ersten Schicht notwendigen Sauerstoffs im Vergleich zu einer nicht weiter beschichteten Korrosionsschutzbeschichtung oder anderweitig, beispielsweise mit Lacken oder Farben, beschichteten Korrosionsschutzbeschichtungen verhindert oder zumindest signifikant retardiert.

Geeignete Sauerstoffbarrierebeschichtungen sind prinzipiell bekannt und werden üblicherweise bei der Warmumformung von Metallen, insbesondere bei der Warmumformung von Stahl, beispielsweise bei der Verarbeitung von presshärtbaren Stählen - auch press hardend steel genannt - verwendet. Bei der Verarbeitung von presshärtbaren Stählen wird das mit einer Sauerstoffbarriereschicht versehene Metallsubstrat auf circa 950 °C erhitzt und anschließend unter Druck umgeformt.

Die Sauerstoffbarriereschicht verhindert eine Verzunderung der Metalloberfläche, d. h. die Oxidation der Metalloberfläche, und wird daher oftmals auch als Zunderschutzschicht bzw. Zunderschutzbeschichtung bezeichnet. Die Zunderbildung erschwert die nachfolgende Behandlung der Metallsubstrate oder deren Einsatz, da durch die Zunderschicht aufwändige Reinigungsverfahren zur Vorbereitung nachfolgender Beschichtungen notwendig werden. Auch werden die Abmessungen von Bauteilen durch die Bildung der Zunderschicht verändert sowie die Optik und Oberflächengüte des Bauteils durch die schwarze, spröde Zunderschicht beeinträchtigt. Nicht zuletzt können Abplatzungen der Zunderschicht als Verunreinigungen in maschinellen Verarbeitungsprozessen Probleme verursachen.

Es hat sich gezeigt, dass hervorragende Ergebnisse im Rahmen der vorliegenden Erfindung bereits mit üblichen kathodischen Korrosionsschutzbeschichtungen auf Zinkbasis, sowie einer darauf aufgebrachten Zunderschutzbeschichtung erhalten werden können. Dies ist insofern überraschend, als Zinkbeschichtungen auf Metall, beispielsweise galvanisch verzinkte und schmelztauchverzinkte Stähle und insbesondere auch Zinklamellenüberzüge auf Stahl, ihre kathodische Korrosionsschutzwirkung bei Temperaturbelastung rasch verlieren. Der Verlust des kathodischen Korrosionsschutzes ist einerseits auf eine Oxidation des Zinks und andererseits auf Rissbildungen in der Beschichtung sowie eine partielle Ablösung der Beschichtung zurückzuführen. Insbesondere Zinklamellenüberzüge, welche üblicherweise bei einer Schichtdicke von 10 µm im Salzsprühtest am Ritz gemäß DIN IN ISO 9227 eine Rotrostinhibierung am Ritz von 1000 Stunden oder mehr aufweisen, zeigen nach einer Temperaturbelastung von über 300 °C einen nur noch geringen oder gar keinen kathodischen Korrosionsschutz mehr, und dies sowohl am Ritz als auch in der Fläche.

Durch die im Rahmen der vorliegenden Erfindung verwendete, mindestens zweischichtige Beschichtung wird dieses Problem verhindert, da die mit der erfindungsgemäßen Beschichtung versehenen Metallsubstrate auch nach länger andauernder Temperaturbelastung von beispielsweise über 500 °C immer noch eine hervorragende kathodische Korrosionsschutzwirkung im Salzsprühtest am Ritz nach DIN EN ISO 9227 aufweisen.

Besonders überraschend ist in diesem Zusammenhang, dass selbst bei längerfristigem oder wiederholtem Erwärmen von erfindungsgemäß beschichteten Substraten auf Temperaturen oberhalb des Schmelzpunktes von elementarem Zink die kathodische Korrosionsschutzwirkung der erfindungsgemäßen Beschichtung erhalten bleibt.

Wie zuvor bereits ausgeführt, können mit handelsüblichen kathodischen Korrosionsschutzbeschichtungen und gleichfalls handelsüblichen Sauerstoffbarrierebeschichtungen, insbesondere Zunderschutzbeschichtungen, hervorragende Ergebnisse erhalten werden. Eine spezielle Abstimmung der beiden Schichten aufeinander kann darüber hinaus den kathodischen Korrosionsschutz bei Hochtemperatur nochmals deutlich verbessern.

Insbesondere hat sich im Rahmen der vorliegenden Erfindung herausgestellt, dass der kathodische Korrosionsschutz auch nach einer länger andauernden Erwärmung des beschichteten Metallsubstrates auf Temperaturen von 500 °C oder mehr erhalten bleibt. Es ist somit möglich, das mit der erfindungsgemäßen Beschichtung versehene Substrat auf Temperaturen zu erhitzen, welche oberhalb des Schmelzpunktes von reinem Zink bzw. der verwendeten Zink-Legierungen liegen, ohne dass der kathodische Korrosionsschutz verringert wird bzw. sogar vollständig einbricht.

Üblicherweise enthält das metallische Substrat mindestens ein Metall ausgewählt aus Aluminium und Eisen, vorzugsweise Eisen, oder besteht aus dessen Legierungen. Gemäß einer bevorzugten Ausführungsform der vorliegenden Erfindung besteht das Substrat aus Stahl.

Im Rahmen der vorliegenden Erfindung ist es im Allgemeinen vorgesehen, dass die erste Schicht zwischen der zweiten Schicht und dem Substrat angeordnet ist.

Besonders gute Ergebnisse werden im Rahmen der vorliegenden Erfindung erhalten, wenn die zweite Schicht unmittelbar auf die erste Schicht aufgebracht ist. Die erfindungsgemäße Beschichtung wird somit bevorzugt als zweischichtige Beschichtung, bestehend aus einer Grundierung bzw. einem Base-Coat und einem Decklack bzw. einem Top-Coat, auf das Substrat aufgebracht. Hierbei kann es vorgesehen sein, dass zwischen der Beschichtung und dem Substrat weitere Schichten, beispielsweise Haftvermittlerschichten, wie Konversionsschichten, vorgesehen sind.

Was die Dicke anbelangt, mit welcher die Beschichtung auf das Substrat aufgebracht ist, so kann diese in weiten Bereichen variieren. Besonders gute Ergebnisse werden jedoch erhalten, wenn die Beschichtung eine Schichtdicke im Bereich von 0,5 bis 200 µm, insbesondere 1 bis 180 µm, vorzugsweise 2 bis 150 µm, bevorzugt 3 bis 120 µm, besonders bevorzugt 4 bis 100 µm, aufweist. Falls die erste Schicht in Form einer Zinklamellenbeschichtung auf das Substrat aufgebracht ist, weist die Beschichtung üblicherweise Schichtdicken im Bereich von 1 bis 30 µm, insbesondere 2 bis 20 µm, vorzugsweise 3 bis 15 µm, bevorzugt 4 bis 10 µm, auf. Die erfindungsgemäße Beschichtung weist folglich, insbesondere bei Verwendung von Zinklamellenbeschichtungen, eine nur geringe Schichtdicke auf, so dass Konturen des Substrats sichtbar bleiben und nicht an Ausprägung bzw. Schärfe verlieren. Darüber hinaus ist die Beschichtung nach der Erfindung flexibel einsetzbar und ohne Weiteres überlackierbar bzw. beschichtbar.

Wie zuvor bereits ausgeführt, besitzt die erfindungsgemäße Beschichtung eine hervorragende Korrosionsschutzwirkung. Üblicherweise ist es im Rahmen der vorliegenden Erfindung vorgesehen, dass auf dem mit der Beschichtung versehenen Substrat im Salzsprühtest am Ritz gemäß DIN EN ISO 9227 und Auswertung nach DIN EN ISO 4628 nach einer vorangegangenen Temperaturbelastung von 300 °C über 30 Tage in einem Zeitraum von mindestens 500 Stunden, insbesondere 600 Stunden, vorzugsweise 800 Stunden, bevorzugt 900 Stunden, besonders bevorzugt 1.000 Stunden, kein Rotrost am Ritz gebildet wird und/oder keine Unterwanderung der Beschichtung beobachtet wird. Im Rahmen dieser Erfindung bezieht sich die Angabe DIN EN ISO 9227 stets auf die Fassung der Norm von September 2012, d. h. 09/212; die Angabe DIN EN ISO 4628 bezieht sich stets auf die Fassung der Norm von März 2013, d. h. 03/2013.

Darüber hinaus wird im Rahmen der vorliegenden Erfindung üblicherweise auf dem mit der Beschichtung versehenen Substrat im Salzsprühtest am Ritz gemäß DIN EN ISO 9227 und Auswertung nach DIN EN ISO 4628 nach einer vorangegangenen Temperaturbelastung von 300 °C über 30 Tage in einem Zeitraum von 500 bis 3.000 Stunden, insbesondere 600 bis 2.500 Stunden, vorzugsweise 800 bis 2.000 Stunden, bevorzugt 900 bis 1.800 Stunden, besonders bevorzugt 1.000 bis 1.500 Stunden, kein Rotrost am Ritz gebildet und/oder keine Unterwanderung der Beschichtung beobachtet.

Im Allgemeinen zeigt ein mit der erfindungsgemäßen Beschichtung versehenes Substrat im Salzsprühtest am Ritz gemäß DIN EN ISO 9227 und Auswertung nach DIN EN ISO 4628 nach einer vorangegangenen Temperaturbelastung von 300 °C über 30 Tage im Vergleich zu einer kathodischen Korrosionsschutzbeschichtung ohne zusätzliche Sauerstoffbarriereschicht erst nach der doppelten, insbesondere fünffachen, vorzugsweise 10fachen, bevorzugt 20fachen, Testdauer Rotrostbildung am Ritz auftritt.

Gemäß einer bevorzugten Ausführungsform der vorliegenden Erfindung wird auf dem mit der Beschichtung versehenen Substrat im Salzsprühtest am Ritz gemäß DIN EN ISO 9227 und Auswertung nach DIN EN ISO 4628 nach einer vorangegangenen Temperaturbelastung von 450 °C über 48 Stunden in einem Zeitraum von mindestens 80 Stunden, insbesondere 100 Stunden, vorzugsweise 150 Stunden, bevorzugt 200 Stunden, besonders bevorzugt 250 Stunden, kein Rotrost am Ritz gebildet wird und/oder keine Unterwanderung der Beschichtung beobachtet wird.

Gleichfalls ist es möglich, dass auf dem mit der Beschichtung versehenen Substrat im Salzsprühtest am Ritz gemäß DIN EN ISO 9227 und Auswertung nach DIN EN ISO 4628 nach einer vorangegangenen Temperaturbelastung von 450 °C über 48 Stunden in einem Zeitraum von 80 bis 1.000 Stunden, insbesondere 100 bis 800 Stunden, vorzugsweise 150 bis 600 Stunden, bevorzugt 200 bis 500 Stunden, besonders bevorzugt 250 bis 350 Stunden, kein Rotrost am Ritz gebildet wird und/oder keine Unterwanderung der Beschichtung beobachtet wird.

Üblicherweise zeigt ein mit der erfindungsgemäßen Beschichtung versehenes Substrat im Salzsprühtest am Ritz gemäß DIN EN ISO 9227 und Auswertung nach DIN EN ISO 4628 nach einer vorangegangenen Temperaturbelastung von 450 °C über 48 Stunden im Vergleich zu einer kathodischen Korrosionsschutzbeschichtung ohne zusätzliche Sauerstoffbarriereschicht erst nach der dreifachen, vorzugsweise fünffachen, bevorzugt 10fachen, besonderes bevorzugt 20fachen, Testdauer Rotrostbildung am Ritz auftritt.

Im Rahmen der vorliegenden Erfindung ist es somit möglich, dass auf dem mit der Beschichtung versehenen Substrat im Salzsprühtest am Ritz gemäß DIN EN ISO 9227 und Auswertung nach DIN EN ISO 4628 nach einer vorangegangenen Temperaturbelastung von 500 °C über 48 Stunden in einem Zeitraum von mindestens 80 Stunden, insbesondere 100 Stunden, vorzugsweise 150 Stunden, bevorzugt 200 Stunden, besonders bevorzugt 250 Stunden, kein Rotrost am Ritz gebildet und/oder keine Unterwanderung der Beschichtung beobachtet.

Gleichermaßen kann es vorgesehen sein, dass auf dem mit der Beschichtung versehenen Substrat im Salzsprühtest am Ritz gemäß DIN EN ISO 9227 und Auswertung nach DIN EN ISO 4628 nach einer vorangegangenen Temperaturbelastung von 500 °C über 48 Stunden in einem Zeitraum von 80 bis 1.000 Stunden, insbesondere 100 bis 800 Stunden, vorzugsweise 150 bis 500 Stunden, bevorzugt 200 bis 450 Stunden, besonders bevorzugt 250 bis 350 Stunden, kein Rotrost am Ritz gebildet wird und/oder keine Unterwanderung der Beschichtung beobachtet wird.

Im Allgemeinen zeigt ein mit der erfindungsgemäßen Beschichtung versehenes Substrat im Salzsprühtest am Ritz gemäß DIN EN ISO 9227 und Auswertung nach DIN EN ISO 4628 nach einer vorangegangenen Temperaturbelastung von 500 °C über 48 Stunden im Vergleich zu einer kathodischen Korrosionsschutzbeschichtung ohne zusätzliche Sauerstoffbarriereschicht erst nach der doppelten, insbesondere dreifachen, vorzugsweise fünffachen, bevorzugt 10fachen, besonderes bevorzugt 20fachen, Testdauer Rotrostbildung am Ritz auftritt.

Die erfindungsgemäße Beschichtung ermöglicht somit einen kathodischen Korrosionsschutz bei Temperaturen bzw. nach Temperaturbelastungen, welche sogar oberhalb der Schmelztemperaturen der verwendeten Opfermetalle, insbesondere von Zink und geeigneten Zinklegierungen liegen kann. Dies ist erstaunlich, da insbesondere die unedlen Opfermetalle bei erhöhten Temperaturen üblicherweise einer verstärkten und raschen Korrosion unterliegen.

Insbesondere überrascht dieses Ergebnis speziell im Hinblick für die im Rahmen der vorliegenden Erfindung bevorzugt eingesetzten Zinklamellensysteme. Ohne sich auf eine Theorie festlegen zu wollen, kann der verbesserte Korrosionsschutz nach Temperaturbelastung von Zinklamellensystemen darauf zurückgeführt werden, dass das inerte, üblicherweise überwiegend anorganisch basierte Bindemittel des zinkhaltigen Beschichtungssystems dafür sorgt, dass die Zinkpartikel einerseits während des Schmelzens weitestgehend ihre Form behalten oder dass zumindest singuläre Zinkinseln im Bindemittel vorliegen und andererseits das Zink durch das Bindemittel in Kombination mit der Sauerstoffbarriereschicht zusätzlich gegen Oxidation geschützt wird.

Die erste Schicht der erfindungsgemäßen Beschichtung weist im Allgemeinen eine Schichtdicke im Bereich von 0,1 bis 180 µm, insbesondere 0,5 bis 150 µm, vorzugsweise 1 bis 140 µm, bevorzugt 2 bis 110 µm, besonders bevorzugt 2 bis 90 µm, auf. Falls die erste Schicht in Form einer Zinklamellenbeschichtung auf das Substrat aufgebracht ist, so weist die erste Schicht üblicherweise Schichtdicken im Bereich von 0,1 bis 25 µm, insbesondere 1 bis 15 µm, vorzugsweise 2 bis 10 µm, bevorzugt 4 bis 8 µm, auf.

Üblicherweise ist es im Rahmen der vorliegenden Erfindung vorgesehen, dass die erste Schicht mindestens ein Metall ausgewählt aus der Gruppe von Zink, Aluminium, Magnesium, Bismut, Zinn, Nickel und Mangan sowie deren Mischungen und Legierungen enthält. Vorzugsweise handelt es sich bei dem Metall der ersten Schicht um Zink, Aluminium oder Magnesium sowie deren Mischungen und Legierungen. Um einen kathodischen Korrosionsschutz zu ermöglichen, müssen die verwendeten Metalle ein niedrigeres elektrochemisches Standardpotential als das Substratmaterial aufweisen bzw. muss dass Substratmaterial bedingt durch Passivierung, insbesondere Selbstpassivierung, dahingehend vor Oxidation geschützt sein, dass das Metall der Beschichtung oxidiert wird. Die zuvor genannten Metalle bilden gegenüber dem Substrat die sogenannten Opfermetalle bzw. die Opferanode, welche anstelle des Substrates korrodiert wird.

Gute Ergebnisse werden im Rahmen der vorliegenden Erfindung erhalten, wenn die erste Schicht Zink und/oder Zinklegierungen aufweist. Zink und Zinklegierungen gewährleisten den wirksamsten Korrosionsschutz, insbesondere Hochtemperaturkorrosionsschutz, zu wirtschaftlich günstigen Bedingungen.

Im Rahmen der vorliegenden Erfindung wird es darüber hinaus bevorzugt, wenn die der Umgebung zugwandte Oberfläche der Beschichtung insbesondere zumindest im Wesentlichen frei ist von Eisen, insbesondere von Eisen-Zink-Legierungen. Vorzugsweise handelt es sich bei den im Rahmen der vorliegenden Erfindung bevorzugt eingesetzten kathodischen Korrosionsschutzschichten nicht Eisen-ZinkLegierungen, insbesondere Galvannealed-Beschichtungen.

Was nun die Ausbildung der ersten Schicht anbelangt, so kann das Metall bzw. können die Metalle auf vielfältige Art und Weise auf Substrat aufgebracht sein. Im Rahmen der vorliegenden Erfindung werden jedoch besonders gute Ergebnisse erhalten, wenn die erste Schicht auf Basis einer durch Elektrolyse oder Feuerverzinkung aufgebrachten Zinkschicht ausgebildet ist.

Bei der Feuerverzinkung wird das zu behandelnde Substrat in ein Bad aus flüssigem Zink getaucht und anschließend abgekühlt, wodurch ein dünner Zinküberzug auf dem Substrat zurückbleibt. Bei der elektrolytischen Verzinkung, auch galvanische Verzinkung genannt, wird das zu beschichtende Substrat in ein Zinkionen enthaltendes Elektrolytbad getaucht. Durch Anlegen einer äußeren Spannung, wobei das Metallsubstrat als Kathode dient, wird eine gleichmäßige Zinkschicht auf den Metallsubstrat abgeschieden. Sowohl die Feuerverzinkung als auch die galvanische bzw. elektrolytische Verzinkung sind übliche Verfahren in der Herstellung von zinkbeschichteten Stahlsubstraten mit aktivem kathodischem Korrosionsschutz.

Beste Ergebnisse werden im Rahmen der vorliegenden Erfindung erhalten, wenn die erste Schicht auf Basis einer Metallpartikel, insbesondere metallische Korrosionschutzpigmente, enthaltenden Matrix ausgebildet ist. Hierbei hat es sich besonders bewährt, wenn zumindest ein Teil der Metallpartikel Zink und/oder Zinklegierungen enthält. Unter einer Matrix ist dabei im Rahmen der vorliegenden Erfindung ein ausgehärtetes Bindemittel zu verstehen, welches die Metallpartikel vorzugsweise umhüllt und vollständig benetzt. Bei einer Matrix im Rahmen der vorliegenden Erfindung handelt es sich insbesondere um anorganische Systeme mit gegebenenfalls geringen organischen Anteilen oder anorganisch-organische Hybridmaterialien, welche vorzugsweise auf Basis von gegebenenfalls organisch modifiziertem Siliziumdioxid, Titandioxid und Zirkoniumdioxid ausgebildet sind.

Was den Gehalt an Metallpartikeln der ersten Schicht anbelangt, so kann dieser naturgemäß in weiten Bereichen variieren. Im Rahmen der vorliegenden Erfindung werden aber besonders gute Ergebnisse erhalten, wenn die erste Schicht mindestens 50 Gew.-%, insbesondere mindestens 60 Gew.-%, vorzugsweise mindestens 70 Gew.-%, Metallpartikel, bezogen auf die erste Schicht, aufweist.

Gleichfalls ist es vorgesehen, dass die erste Schicht einen Anteil an Metallpartikeln im Bereich von 50 bis 95 Gew.-%, insbesondere 60 bis 95 Gew.-%, vorzugsweise 70 bis 90 Gew.-%, bezogen auf die erste Schicht, aufweist.

Wie sich herausgestellt hat, ist nicht nur der Anteil der Metallpartikel in Zusammensetzung oder ihre chemische Zusammensetzung für die Erzeugung der kathodischen Schutzwirkungen maßgeblich, sondern auch die Form der Teilchen hat einen entscheidenden Einfluss auf den erzielten Korrosionsschutz.

Üblicherweise enthält die erste Schicht plättchenförmige und/oder kornförmige, insbesondere sphärische, Metallpartikel. Bevorzugt wird es dabei, wenn die erste Schicht plättchenförmige Metallpartikel aufweist. Plättchenförmige Metallpartikel werden im technischen Sprachgebrauch auch Flakes oder Lamellen genannt. Plättchenförmige Metallpartikel weisen in einer Raumrichtung eine deutlich geringere Ausdehnung auf, welche nachfolgend als Dicke bezeichnet wird; die Ausdehnung in den beiden anderen Raumrichtungen wird nachfolgend als Durchmesser bezeichnet. Kornförmige Metallpartikel sind unregelmäßig geformte Metallpartikel, wohingegen sphärische Metallpartikel näherungsweise Kugelgestalt besitzen. Die Verwendung von sphärischen Metallpartikeln ist gegenüber der Verwendung von kornförmigen Metallpartikeln bevorzugt.

Die Größe der erfindungsgemäß eingesetzten Metallpartikel kann gleichfalls in weiten Bereichen in Abhängigkeit von den weiteren Bedingungen variieren. Besonders gute Ergebnisse werden jedoch erhalten, wenn die plättchenförmigen Metallpartikel eine Dicke von 50 bis 1.000 nm, insbesondere 60 bis 750 nm, vorzugsweise 80 bis 600 nm, bevorzugt 100 bis 500 nm, aufweisen.

Gleichfalls kann es vorgesehen sein, dass die plättchenförmigen Metallpartikel einen Durchmesser von 1 bis 25 µm, insbesondere 2 bis 20 µm, vorzugsweise 5 bis 18 µm, bevorzugt 5 bis 15 µm, aufweisen.

Darüber hinaus wird es im Rahmen der vorliegenden Erfindung bevorzugt, wenn die kornförmigen, insbesondere sphärischen, Metallpartikel Partikeldurchmesser im Bereich von 500 nm bis 20 µm, insbesondere 500 nm bis 10 µm, vorzugsweise 500 nm bis 5 µm, aufweisen. Mit Metallpartikeln in den vorgenannten Größen lassen sich insbesondere bei genauer mengenmäßiger Abstimmung hervorragende Korrosionsschutzbeschichtungen erhalten.

Im Allgemeinen sind die Metallpartikel auf Basis reinen Zinks und/oder Zinklegierungen ausgebildet. Bei im Rahmen der vorliegenden Erfindung bevorzugt eingesetzten Zinklegierungen handelt es sich um Zinklegierung ausgewählt aus der Gruppe von Zink-Bismut-Legierungen, Zink-Aluminium-Legierungen und/oder von Zink-Aluminium-Magnesium-Legierungen, insbesondere Zink-Aluminium-Legierungen und/oder von Zink-Aluminium-Magnesium-Legierungen, vorzugsweise Zink-Aluminium-Magnesium-Legierungen.

Gemäß einer bevorzugten Ausführungsform der vorliegenden Erfindung enthält die erste Schicht Zinklammellen als plättchenförmige Metallpartikel, insbesondere auf Basis reinen Zinks und/oder der vorgenannten Zinklegierungen.

Es hat sich erwiesen, dass besonders gute Ergebnisse mit plättchenförmigen Metallpartikeln auf Basis von Zink-Aluminium-Magnesium-Legierungen erhalten werden können, was überrascht, da gerade Magnesium üblicherweise rasch korrodiert. Überraschenderweise hat sich jedoch herausgestellt, dass mit Korrosionsschutzbeschichtungen, welche plättchenförmigen Metallpartikeln auf Basis von Zink-Aluminium-Magnesium-Legierungen enthalten, ein deutlich verbesserter Korrosionsschutz erzielt werden kann. Die Beschichtungssysteme mit plättchenförmigen Metallpartikeln auf Basis von Zink-Aluminium-Magnesium-Legierungen zeigen auch ohne zusätzliche Sauerstoffbarriereschicht deutlich verbesserte Korrosionschutzeigenschaften als herkömmliche Zinklamellensysteme, und dies auch unter Temperaturbelastung. Durch eine Sauerstoffbarriereschicht wird die Temperaturbeständigkeit dieser Systeme jedoch gleichfalls um ein Vielfaches erhöht.

Im Rahmen der vorliegenden Erfindung kann es vorgesehen sein, dass die erste Schicht auf Basis eines Zinklammellenüberzugs ausgebildet ist. Insbesondere mit Zinklamellenüberzügen werden im Rahmen der vorliegenden Erfindung gerade unter Hochtemperaturbelastung besonderes gute Korrosionsschutzwirkungen erzielt.

Darüber hinaus kann es vorgesehen sein, dass die erste Schicht mindestens einen Füllstoff in Mengen von 0,5 bis 10 Gew.-%, insbesondere 1 bis 8 Gew.-%, vorzugsweise 1 bis 5 Gew.-%, bezogen auf die erste Schicht, aufweist.

Als Füllstoffe können nahezu beliebige partikuläre unter Anwendungsbedingungen stabile und inerte Stoffe, insbesondere anorganische Mineralien, Gläser, keramische Stoffe und Metalle verwendet werden. Es hat sich allerdings herausgestellt, dass besonders gute Ergebnisse erhalten werden, wenn der Füllstoff ausgewählt ist aus Metallen, insbesondere Al, Sn, Ni, Mn, Bi, W oder Edelstahl sowie deren Mischungen und Legierungen, vorzugsweise AI, bevorzugt Aluminiumflakes.

Gleichfalls werden gute Ergebnisse erhalten, wenn der Füllstoff ausgewählt ist aus der Gruppe von Bornitrid, Wolframcarbid und Gläsern. Die Füllstoffe können alternativ zu oder gemeinsam mit den metallischen Füllstoffen verwendet werden.

Gemäß einer besonderen Ausführungsform der vorliegenden Erfindung ist die Beschichtungszusammensetzung, aus welcher die erste Schicht erhalten wird, eine sogenannte Ultra-High-Solid-Zusammensetzung, d. h. eine Beschichtungszusammensetzung mit Feststoffanteil von bis zu 100 Gew.-%, insbesondere 95 bis 100 Gew.-%. Ultra-High-Solid-Zusammensetzungen können noch einen Lösemittelanteil von bis 5 Gew.-%, bezogen auf die Zusammensetzung, aufweisen. Dieser Lösemittelanteil dient üblicherweise der Einstellung der Viskosität und der besseren Applizierbarkeit der Beschichtungszusammensetzung. Es hat sich herausgestellt, dass, falls die Beschichtung aus einer Ultra-High-Solid-Zusammensetzung erhalten wird, andere bevorzugte Bereiche für den Gehalt an Metallpartikeln gewählt werden müssen.

Falls die erste Schicht der erfindungsgemäßen Beschichtung aus einer Beschichtungszusammensetzung mit einem Feststoffanteil von 95 bis 100 Gew.-% erhalten wird, so hat es sich bewährt, wenn die erste Schicht mindestens 35 Gew.-%, insbesondere mindestens 50 Gew.-%, vorzugsweise mindestens 70 Gew.-%, bevorzugt mindestens 80 Gew.-%, Metallpartikel, bezogen auf die erste Schicht, aufweist.

Gleichfalls kann es gemäß dieser Ausführungsform sein, dass die erste Schicht einen Anteil an Metallpartikeln im Bereich von 35 bis 95 Gew.-%, insbesondere 50 bis 95 Gew.-%, vorzugsweise 70 bis 90 Gew.-%, bevorzugt 80 bis 90 Gew.-%, bezogen auf die erste Schicht, aufweist.

Besonders gute Ergebnisse werden gemäß dieser Ausführungsform erhalten, wenn die erste Schicht kornförmige, insbesondere sphärische Metallpartikel in Mengen von 35 bis 95 Gew.-%, insbesondere 50 bis 90 Gew.-%, vorzugsweise 70 bis 90 Gew.-%, bevorzugt 80 bis 90 Gew.-%, bezogen auf die erste Schicht, aufweist. Hierbei hat es sich bewährt, wenn die Metallpartikel auf Basis von Zink oder Zinklegierungen, vorzugsweise elementarem Zink, ausgebildet sind. Besonders gute Ergebnisse werden gemäß dieser Ausführungsform erhalten, wenn die kornförmigen bzw. sphärischen Metallpartikel auf Basis von Zinkstaub ausgebildet sind.

Darüber hinaus kann es gemäß dieser Ausführungsform vorgesehen sein, dass die erste Schicht plättchenförmige Metallpartikel in Mengen von 0,1 bis 50 Gew.-%, insbesondere 0,2 bis 25 Gew.-%, vorzugsweise 0,3 bis 10 Gew.-%, bevorzugt 0,5 bis 5 Gew.-%, bezogen auf die erste Schicht, aufweist. In diesem Zusammenhang werden besonders gute Ergebnisse erhalten, wenn die plättchenförmigen Metallpartikel auf Basis von Zink oder Zinklegierungen, vorzugsweise elementarem Zink, ausgebildet sind. Als Zinklegierungen kommen insbesondere die zuvor für Zinklamellenprimer genannten Legierungen in Frage.

Bei der Verwendung von Beschichtungszusammensetzungen mit einem Feststoffgehalt von 95 bis 100 Gew.-% werden somit im Vergleich zur lösemittel- bzw. wasserbasierten Beschichtungszusammensetzung bevorzugt sphärische Metallpartikel im verwendet. Dies gilt insbesondere, wenn niedrig viskose Beschichtungszusammensetzungen erhalten werden sollen, welche beispielsweise durch Sprühauftrag appliziert werden, da sphärische Metallpartikel die Viskosität der Beschichtungszusammensetzung weniger stark ansteigen lassen als plättchenförmige Metallpartikel.

Wie zuvor ausgeführt, weist die erste Schicht der erfindungsgemäßen Beschichtung eine anorganisch basierte Matrix auf. Weiterhin ist die anorganisch basierte Matrix organisch modifiziert ist, d. h. enthält organische Reste bzw. organische funktionelle Gruppen, welche an ein anorganisches Grundgerüst gebunden sind. Hierdurch wird eine erhöhte Flexibilität der ersten Schicht und somit der gesamten Beschichtung erzielt, wodurch beispielsweise ein Abplatzen der Beschichtung bzw. ein Ablösen vom Substrat oder die Bildung von Rissen in der Beschichtung vermieden wird.

Die anorganisch basierte Matrix der ersten Schicht enthält anorganische Oxide des Siliciums, Titans und/oder Zirkoniums, vorzugsweise Siliciumdioxid und/oder Titandioxid, oder besteht insbesondere zumindest im Wesentlichen aus den vorgenannten Oxiden. Die vorgenannten anorganischen Oxide bilden das Grundgerüst der anorganisch basierten Matrix, wobei die anorganisch basierte Matrix auch aus Mischungen bzw. Co-Kondensaten der jeweiligen Oxide aufgebaut sein kann.

Weiterhin ist die anorganische basierte Matrix der ersten Schicht durch Kondensationsreaktionen anorganischer oder organischer Gruppen und/oder Polymerisationsreaktionen organischer Gruppen, insbesondere Kondensationsreaktionen anorganischer Gruppen, aus Silanen, Polysilanen, Silanhydrolysaten, Polysiloxanen, Silikonaten, Titanaten, Polytitanaten, Zirkonaten und deren Mischungen erhältlich. Besonders gute Ergebnisse werden dabei erzielt, wenn die anorganisch basierte Matrix aus Silanen, Silanhydrolysaten, Polysiloxanen, Titanaten, Polytitanaten sowie deren Mischungen erhalten wird.

Die Kondensations- bzw. Polymerisationsreaktionen können dabei thermisch oder durch elektromagnetische Strahlung induziert werden. In diesem Zusammenhang ist es möglich, dass alle für die Kondensation bzw. Polymerisation benötigten Reaktanden oder Katalysatoren in der anwendungsfertigen Beschichtungszusammensetzung bereits vorliegen; es ist jedoch auch möglich dass einzelne Reaktanden bzw. Katalysatoren zur Initiierung der chemischen Reaktion erst kurz vor oder nach der Beschichtung des Subtrats mit der Beschichtungszusammensetzung zugefügt werden oder, wie beispielsweise Luftfeuchtigkeit, in die Beschichtungszusammensetzung eindiffundieren.

Unter einer Polymerisationsreaktion sind dabei im Rahmen der vorliegenden Erfindung Reaktionen funktioneller organischer Gruppen zu verstehen, welche zu einer Verknüpfung einzelner Moleküle bzw. Partikel, welche die anorganische Matrix bilden, führen. Polymerisationsreaktionen können beispielsweise durch Olefine, wie Acrylate, Vinylgruppen oder Epoxide erfolgen. Unter Kondensationsreaktionen sind im Rahmen der vorliegenden Erfindung Reaktionen von zwei oder mehr Molekülen bzw. Partikeln zu verstehen, bei welchen unter Wasserabspaltung Bindungen zwischen den einzelnen Molekülen bzw. Partikeln gebildet werden. Beispiele für Kondensationsreaktionen organischer Gruppen sind Veresterungen oder Amidierungen. Beispiele für Kondensationsreaktionen anorganischer Gruppen sind die Reaktion von aus der Hydrolyse von Titanaten bzw. Alkoxysilanen und Zirkonaten hervorgegangenen anorganischen Säurederivate, welche zur Ausbildung polymerer anorganischer Oxide, insbesondere Siliciumdioxid, Titandioxid und Zirkoniumoxid, führen. Ein hoher Anteil an anorganischen Verbindungen, d. h. insbesondere an Siliciumdioxid, Titandioxid und/oder Zirkoniumdioxid führt dabei zu besonders widerstandsfähigen und gegen Temperaturbelastung resistente Beschichtungen, wobei ein gewisser Anteil an organischen Gruppen oftmals notwendig ist, um den Beschichtungen die notwendige Flexibilität zu verleihen. Rein anorganisch basierte Beschichtungen sind sehr spröde und werden beim Auftreten größerer mechanischer Belastung beschädigt, was zu einer Verringerung bzw. zum Verlust des kathodischen Korrosionsschutzes führt.

Was nun die Menge der anorganisch basierten Matrix in der ersten Schicht anbelangt, so kann diese naturgemäß in weiten Bereichen variieren. Besonders gute Ergebnisse werden jedoch erhalten, wenn die erste Schicht die anorganisch basierte Matrix in Mengen von 5 bis 45 Gew.-%, insbesondere 5 bis 40 Gew.-%, vorzugsweise 10 bis 30 Gew.-%, bevorzugt 10 bis 20 Gew.-%, bezogen auf die erste Schicht, aufweist.

Gemäß einer bevorzugten Ausführungsform der vorliegenden Erfindung ist die anorganisch basierte Matrix mittels organischer Reste modifiziert. In diesem Zusammenhang hat es sich bewährt, wenn die organischen Reste ausgewählt sind aus Alkyl-, Aryl- und Olefinresten sowie deren Mischungen und Umsetzungsprodukten.

Gemäß einer weiteren bevorzugten Ausführungsform der vorliegenden Erfindung sind die organischen Reste C₁- bis C₁₀-Alkylreste, insbesondere C₁- bis C₅-Alkylreste, vorzugsweise C₁- bis C₃-Alkylreste, bevorzugt C₁- und/oder C₂-Alkylreste.

Gleichfalls ist es bevorzugt, wenn die organischen Reste C₆- bis C₂₀-Arylreste, insbesondere C₆- bis C₁₅-Arylreste, vorzugsweise C₆- bis C₁₀-Arylreste, sind.

Darüber hinaus kann es vorgesehen sein, dass die organischen Reste C₂- bis C₁₀-Olefinreste, insbesondere C₂- bis C₈-Olefinreste, vorzugsweise C₂- bis C₅-Olefinreste, bevorzugt C₂- und/oder C₃-Olefinreste, besonders bevorzugt Vinylreste, sind. Mit den vorgenannten organischen Gruppen ist es möglich, besonders widerstandsfähige und gleichzeitig flexible anorganisch basierte Matrizes zu erhalten. Besonders bevorzugt ist es, wenn die organischen Reste Methyl- und/oder Ethylreste und/oder Vinylreste sind.

Darüber hinaus kann es im Rahmen der vorliegenden Erfindung vorgesehen sein, dass die organischen Reste zusätzlich polare chemische Gruppen, insbesondere ausgewählt aus Alkoholen, Ethern, Thiolen, Aminen, Aldehyden, Ketonen, Estern, Amiden, Urethanen und/oder Carbonsäuren, vorzugsweise Alkoholen, Aminen und/oder Carbonsäuren, aufweisen.

Die erste Schicht der erfindungsgemäßen Beschichtung ist üblicherweise durch lösemittelhaltige und/oder wasserbasierte Beschichtungszusammensetzungen erhältlich, welche bei Raumtemperatur oder unter erhöhter Temperatur vernetzen. Die Vernetzung kann dabei durch in der Beschichtungszusammensetzung enthaltene Komponenten oder - insbesondere bei lösemittelbasierten System - unter Einwirkung von Luftfeuchtigkeit erfolgen.

Darüber hinaus ist es jedoch auch möglich - wie zuvor bereits ausgeführt - dass die erste Schicht der erfindungsgemäßen Beschichtung aus einer Beschichtungszusammensetzung mit einem Feststoffanteil von 95 bis 100 Gew.-%, d. h. aus einer sogenannten Ultra-High-Solid-Beschichtungszusammensetzung, erhalten wird. Falls die erste Schicht der erfindungsgemäßen Beschichtung durch eine Beschichtungszusammensetzung mit einem Feststoffanteil von 95 bis 100 Gew.-% erhalten wird, so weist die erste Schicht die anorganisch basierte Matrix üblicherweise in Mengen von 5 bis 65 Gew.-%, insbesondere 5 bis 50 Gew.-%, vorzugsweise 10 bis 30 Gew.-%, bevorzugt 10 bis 20 Gew.-%, bezogen auf die erste Schicht, auf. Im Allgemeinen vernetzen eine Beschichtungszusammensetzung mit einem Feststoffanteil von 95 bis 100 Gew.-%, bezogen auf die Zusammensetzung, unter Einwirkung von Luftfeuchtigkeit.

Was nun die zweite Schicht der erfindungsgemäßen Beschichtung anbelangt, so ist diese in Form einer Sauerstoffbarrierebeschichtung ausgebildet.

Im Allgemeinen weist die zweite Schicht der erfindungsgemäßen Beschichtung eine Schichtdicke im Bereich von 0,1 bis 50 µm, insbesondere 0,5 bis 40 µm, vorzugsweise 0,7 bis 30 µm, bevorzugt 1 bis 10 µm, besonders bevorzugt 1 bis 5 µm, ganz besonders bevorzugt 1 bis 3 µm, auf.

Im Rahmen der vorliegenden Erfindung ist es vorgesehen, dass die zweite Schicht der erfindungsgemäßen Beschichtung eine anorganisch basierte Matrix, insbesondere ein ausgehärtetes Bindemittel bzw. ein ausgehärtetes Bindemittelsystem, aufweist.

Ebenfalls wird die anorganisch basierte Matrix der zweiten Schicht durch anorganische Oxide des Siliciums, Titans und/oder Zirkoniums gebildet, vorzugsweise durch Siliciumdioxid und/oder Titandioxid, bevorzugt Siliciumdioxid, gebildet. In diesem Zusammenhang kann es vorgesehen sein, dass beispielsweise auch Mischoxide bzw. Co-Kondensationsprodukte aus silicium-, titan- und zirkoniumhaltigen Vorläufersubstanzen gemeinsam verwendet werden. Bevorzugt wird es jedoch, wenn das anorganische Oxid Siliciumdioxid ist, welches gegebenenfalls geringe Mengen an Titandioxid enthält.

Gemäß einer bevorzugten Ausführungsform der vorliegenden Erfindung ist die anorganisch basierte Matrix organisch modifiziert. Die organische Modifizierung der anorganisch basierten Matrix resultiert wiederum in einer erhöhten Flexibilität der zweiten Schicht, insbesondere der Sauerstoffbarriereschicht, und verhindert somit ein Abplatzen bzw. ein Ablösen der Beschichtung sowie eine Rissbildung innerhalb der Beschichtung.

Im Rahmen der vorliegenden Erfindung werden besonders gute Ergebnisse erhalten, wenn das Bindemittel mittels organischer Reste modifziert ist, insbesondere wobei die organischen Reste ausgewählt sind Alkyl-, Aryl- und Olefinresten sowie deren Mischungen und Umsetzungsprodukten. In diesem Zusammenhang kann es vorgesehen sein, dass die organischen Reste C₁- bis C₁₀-Alkylreste, insbesondere C₁- bis C₅-Alkylreste, vorzugsweise C₁- bis C₃-Alkylreste, bevorzugt C₁- und/oder C₂-Alkylreste, sind.

Gleichfalls kann es vorgesehen sein, dass die organischen Reste C₆- bis C₂₀-Arylreste, insbesondere C₆- bis C₁₅-Arylreste, vorzugsweise C₆- bis C₁₀-Arylreste, sind.

Darüber hinaus ist es möglich, dass die organischen Reste C₂- bis C₁₀-Olefinreste, insbesondere C₂- bis C₈-Olefinresten, vorzugsweise C₂- bis C₅-Olefinresten, bevorzugt C₂- und/oder C₃-Olefinresten, besonders bevorzugt Vinylreste, sind.

Besonders gute Ergebnisse werden im Rahmen der vorliegenden Erfindung erhalten, wenn die organischen Reste ausgewählt sind aus Methyl- und/oder Ethylresten sowie Methylphenylresten.

Im Allgemeinen ist die anorganisch basierte Matrix der zweiten Schicht aus Silanen, Polysilanen, Silanhydrolysaten, Polysiloxanen, Silikonaten, Silikaten, Titanaten, Polytitanaten, Zirkonaten und Aluminiumdihydrogenphosphat, insbesondere Silanen, Silanhydrolysaten und Polysiloxanen, sowie deren Mischungen, erhältlich. Insbesondere anorganisch basierte Matrizes auf Basis von Siliciumdioxid zeigen eine hohe Undurchlässigkeit gegenüber Gasen unter erhöhten Temperaturen bei gleichzeitig guter Flexibilität der Beschichtung.

Die anorganisch basierte Matrix der zweiten Schicht kann wie die anorganisch basierte Matrix der ersten Schicht durch Polymerisations- und Kondensationsreaktionen organischer und anorganischer Gruppen erhalten werden.

Gemäß einer bevorzugten Ausführungsform der vorliegenden Erfindung wird die anorganisch basierte Matrix der zweiten Schicht durch Kondensationsreaktionen anorganischer Gruppen erhalten. Die anorganisch basierte Matrix der zweiten Schicht wird somit bevorzugt durch Kondensationsreaktionen anorganischer Hydroxide, welche beispielsweise durch Hydrolyse der entsprechenden Alkoxyverbindungen erhalten werden, hergestellt. Auf diese Weise werden besonders widerstandsfähige und auch unter erhöhter Temperatur oxidationsbeständige Beschichtungen erhalten. Bei Verknüpfung der einzelnen Moleküle bzw. Partikel der Beschichtungszusammensetzung über organische Gruppen wird bei hoher Temperatur eine zumindest partielle Oxidation der Kohlenstoffketten beobachtet, welche zu einer Verschlechterung der Korrosionsschutzeinwirkung der Beschichtung führt.

Darüber hinaus werden im Rahmen der vorliegenden Erfindung sehr gute Ergebnisse erhalten, wenn die anorganisch basierte Matrix der zweiten Schicht einen Kohlenstoffgehalt von höchstens 50 Gew.-%, insbesondere 40 Gew.-%, vorzugsweise 35 Gew.-%, bevorzugt 30 Gew.-%, bezogen auf die anorganische Matrix, aufweist.

Gleichermaßen ist es bevorzugt, wenn die anorganisch basierte Matrix der zweiten Schicht einen Kohlenstoffgehalt im Bereich von 0,01 bis 50 Gew.-%, insbesondere 0,05 bis 40 Gew.-%, vorzugsweise 0,1 bis 35 Gew.-%, bevorzugt 0,1 bis 30 Gew.-%, bezogen auf die anorganisch basierte Matrix, aufweist.

Ein gewisser Kohlenstoffanteil in der anorganisch basierten Matrix ist oftmals vorteilhaft und auch notwendig, um - wie bereits zuvor ausgeführt - der Beschichtung die notwendige Flexibilität zu verleihen, jedoch hat sich herausgestellt, dass ein zu hoher Kohlenstoffanteil, insbesondere die Verwendung längerkettiger Kohlenstoffreste, zu einer Oxidation der organischen Bestandteile bei erhöhten Temperaturen führt, was die Struktur der Beschichtung und somit die Korrosionsschutzwirkung schwächt.

Vollständig kohlenstofffreie Matrices mit guten mechanischen Eigenschaften lassen sich erhalten, wenn das Bindemittel der Beschichtungszusammensetzung für die zweite Schicht ausgewählt ist aus Polysilikaten, insbesondere Wasserglas, vorzugsweise Natrium- und/oder Kaliumwasserglas, oder Aluminiumdihydrogenphosphat.

Die anorganisch basierte Matrix der zweiten Schicht ist gleichfalls - wie die erste Schicht - aus lösemittel- und/oder wasserbasierten Beschichtungszusammensetzungen oder aus Ultra-High-Solid-Beschichtungszusammensetzungen mit einem Feststoffgehalt von 95 bis 100 Gew.-%, bezogen auf die Beschichtungszusammensetzung, erhältlich.

Gleichfalls kann die zweite Schicht mit inerten keramischen oder glasbasierten Partikeln, insbesondere Flakes, versehen sein. Nochmals deutlich verbessert wird die Temperaturbeständigkeit des kathodischen Korrosionsschutzes allerdings, da die zweite Schicht Metallpartikel aufweist.

Erfindungsgemäß ist es vorgesehen, dass die zweite Schicht einen Anteil an Metallpartikeln im Bereich von 35 bis 95 Vol.-%, insbesondere 45 bis 80 Gew.-%, vorzugsweise 55 bis 70 Gew.-%, bezogen auf die zweite Schicht, aufweist.

Die zweite Schicht der erfindungsgemäßen Beschichtung weist also Metallpartikel auf, wobei die Metallpartikel Aluminiumpartikel sind.

Gleichfalls kann es vorgesehen sein, dass die zweite Schicht plättchenförmige und/oder kornförmige, insbesondere sphärische, Metallpartikel, vorzugsweise plättchenförmige Metallpartikel, aufweist. Es hat sich herausgestellt, dass plättchenförmige Metallpartikel, insbesondere Aluminiumflakes, eine hervorragende Sauerstoffbarriere darstellen und eine Oxidation der kathodischen Korrosionsschicht auch bei hohen Temperaturen wirkungsvoll verhindern.

In diesem Zusammenhang hat es sich bewährt, wenn die plättchenförmigen Metallpartikel eine Dicke von 10 bis 1.000 nm, insbesondere 25 bis 750 nm, vorzugsweise 40 bis 600 nm, bevorzugt 50 bis 500 nm, aufweisen.

Gleichfalls wird es bevorzugt, wenn die plättchenförmigen Metallpartikel einen Durchmesser von 50 nm bis 25 µm, insbesondere 100 nm bis 20 µm, vorzugsweise 250 nm bis 15 µm, bevorzugt 500 nm bis 10 µm, besonders bevorzugt 1 bis 8 µm, ganz besonders bevorzugt 3 bis 5 µm, aufweisen.

Was nun die Größe der verwendeten Metallpartikel anbelangt, so kann diese in weiten Bereichen variieren. Besonders gute Ergebnisse werden jedoch erhalten, wenn die plättchenförmigen Metallpartikel eine Dicke von 50 bis 1.000 nm, insbesondere 60 bis 750 nm, vorzugsweise 80 bis 600 nm, bevorzugt 100 bis 500 nm, aufweisen.

Gleichermaßen ist es von Vorteil, wenn die plättchenförmigen Metallpartikel einen Durchmesser von 1 µm bis 25, insbesondere 2 µm bis 20 µm, vorzugsweise 5 bis 18 µm, bevorzugt 5 bis 15 µm, aufweisen.

Sollte die zweite Schicht der erfindungsgemäßen Beschichtung kornförmige bzw. sphärische Metallpartikel aufweisen, so haben diese üblicherweise Partikeldurchmesser im Bereich von 500 nm bis 10 µm, insbesondere 500 nm bis 5 µm, vorzugsweise 500 nm bis 3 µm.

Darüber hinaus kann vorgesehen sein, dass die zweite Schicht weitere Partikel, insbesondere Füllstoffe enthält. Wenn die zweite Schicht Füllstoffe enthält, so kann deren Menge in weiten Bereichen variieren. Es hat sich jedoch bewährt, wenn die zweite Schicht die Füllstoffe in Mengen von 0,5 bis 10 Gew.-%, insbesondere 1 bis 8 Gew.-%, vorzugsweise 2 bis 5 Gew.-%, bezogen auf die zweite Schicht, aufweist.

Die Füllstoffe sollte in diesem Zusammenhang temperatur- und oxidationsbeständig sowie inert sein, d. h. sie dürfen unter Anwendungsbedingungen nicht reaktiv gegenüber weitern Bestandteilen der Beschichtung, des Substrats oder der Umgebung, insbesondere gegenüber Luftsauerstoff, sein. Gute Ergebnisse werden erhalten, wenn die Füllstoffe ausgewählt sind aus Wolframcarbid, Bornitrid, Glaspartikeln, Eisenphosphid, Zirkondioxid, Edelstahl sowie deren Mischungen.

Es zeigen die Figurendarstellungen gemäß
- Fig. 1:: ein mit einer erfindungsgemäßen Beschichtung 1 versehenes metallisches Substrat 2;
- Fig. 2:: ein mit einer kathodischer Korrosionsschutzbeschichtung mit Lamellen auf Basis reinen Zinks versehenes Stahlblech nach Durchführung eines Salzsprühtests am Ritz gemäß DIN EN ISO 9227 nach vorangehender Temperaturbelastung bei 400°C für 48 Stunden;
- Fig. 3:: ein mit einer kathodischen Korrosionsschutzbeschichtung mit Lamellen auf Basis einer Zink-Aluminium-Magnesium-Legierung versehenes Stahlblech nach Durchführung eines Salzsprühtests am Ritz gemäß DIN EN ISO 9227 nach vorangehender Temperaturbelastung bei 400°C für 48 Stunden;
- Fig. 4:: ein mit kathodischer Korrosionsschutzbeschichtung und Sauerstoffbarrierebeschichtung versehenes Stahlsubstrat nach Durchführung eines Salzsprühtests am Ritz gemäß DIN EN ISO 9227 im Anschluss an eine Temperaturbelastung von 400°C über 48 Stunden;
- Fig. 5:: eine mit einer kathodischen Korrosionsschutzbeschichtung versehenes Stahlblech nach Durchführung eines Salzsprühtests am Ritz gemäß DIN EN ISO 9227 im Anschluss an eine Temperaturbelastung von 500°C über 48 Stunden; und
- Fig. 6:: ein mit einer kathodischen Korrosionsschutzbeschichtung sowie einer Sauerstoffbarrierebeschichtung versehenes Stahlblech nach Durchführung eines Salzsprühtests am Ritz gemäß DIN EN ISO 9227 im Anschluss an eine Temperaturbelastung von 500°C über 48 Stunden.

Eine Beschichtungszusammensetzung zur Herstellung der kathodischen Korrosionsschutzbeschichtung, insbesondere mit einem erhöhten Korrosionsschutz nach Temperaturbelastung, kann enthalten
(a) mindestens einen Matrixbildner,
(b) Metallpartikel und
(c) gegebenenfalls Additive und Hilfsstoffe.

Unter einem Matrixbildner ist dabei das Bindemittel zu verstehen, welches die Metallpartikel und gegebenenfalls weitere Additive und Hilfsstoffe enthält und einschließt und bei Vernetzung bzw. Aushärtung die feste Matrix bildet, in welcher die Metallpartikel und gegebenenfalls weiteren Zusatzstoffe eingebettet sind. Der Matrixbildner bildet vorzugsweise bei Aushärtung bzw. Vernetzung der Beschichtungszusammensetzung zur Herstellung der kathodischen Korrosionsschutzbeschichtung die anorganisch basierte Matrix der ersten Schicht der erfindungsgemäßen Beschichtung.

Es sollen unter Matrixbildnern sämtliche Bestandteile bzw. Verbindungen der Beschichtungszusammensetzung verstanden werden, welche einen Teil der vorzugsweise anorganisch basierten Matrix bilden. Insbesondere wird hier nicht zwischen Bindemitteln und Vernetzern unterschieden, da die Anmelderin herausgefunden hat, dass auch typische Vernetzer für silanbasierte Systeme bzw. polysiloxanbasierte Systeme, wie beispielsweise Tetrabutyltitanat, selbst Hauptbestandteil des ausgehärteten bzw. vernetzten Bindemittels bzw. der anorganisch basierten Matrix sein können. Die Auswahl der Matrixbildner erfolgt somit nach den Kriterien, dass eine möglichst homogene Beschichtung mit gewünschten Vernetzungs- bzw. Aushärtezeiten vorliegt.

Es kommt folglich hauptsächlich darauf an, Matrixbildner mit zu einander kompatiblen Reaktionsgeschwindigkeiten auszuwählen, um das gewünschte Härtungs- und Vernetzungsverhalten der Matrix einzustellen.

Üblicherweise liegt die Beschichtungszusammensetzung als Dispersion vor. Unter einer Dispersion ist jedes mindestens zweiphasige, insbesondere homogene Gemisch aus einer kontinuierlichen Phase, dem Dispersionsmedium, sowie einer darin homogen und fein verteilten diskoninuierlichen Phase, den dispergierten Stoffen, zu verstehen.

In diesem Zusammenhang kann es vorgesehen sein, dass die Zusammensetzung organische Lösemittel und/oder Wasser enthält und/oder dass die Zusammensetzung einen Feststoffgehalt von 95 bis 100 Gew.-%, bezogen auf die Zusammensetzung, aufweist.

Falls die Beschichtungszusammensetzung organische Lösemittel und/oder Wasser enthält, so enthält die Beschichtungszusammensetzung diese üblicherweise in Mengen von 0,5 bis 60 Gew.-%, insbesondere 1 bis 50 Gew.-%, vorzugsweise 2 bis 40 Gew.-%, bevorzugt 5 bis 30 Gew.-%, bezogen auf die Zusammensetzung. Als organische Lösemittel können sämtliche geeigneten organischen Lösemittel verwendet werden. Insbesondere geeignet sind aromatische und aliphatische Kohlenwasserstoffe sowie polare organische Lösemittel, wie beispielsweise Aceton, Alkohole, insbesondere C₁- bis C₂₀-Alkohole, vorzugsweise C₂- bis C₁₀-Alkohole, bevorzugt C₂- bis C₈-Alkohole, Nitrile oder Nitroverbindungen, insbesondere Nitropropan.

Vorzugsweise weist die Beschichtungszusammensetzung mindestens 30 Gew.-%, insbesondere mindestens 40 Gew.-%, vorzugsweise mindestens 45 Gew.-%, bevorzugt mindestens 50 Gew.-%, Metallpartikel, bezogen auf die Zusammensetzung, auf.

Gleichfalls ist es bevorzugt, wenn die Beschichtungszusammensetzung einen Anteil an Metallpartikeln im Bereich von 35 bis 95 Gew.-%, insbesondere 40 bis 80 Gew.-%, vorzugsweise 45 bis 70 Gew.-%, bevorzugt 50 bis 60 Gew.-%, bezogen auf die Zusammensetzung, aufweist.

Weiterhin werden gute Ergebnisse erhalten, wenn zumindest ein Teil der Metallpartikel Zink und/oder Zinklegierungen enthält.

Gemäß einer Ausführungsform weist die Beschichtungszusammensetzung plättchenförmige und/oder kornförmige, insbesondere plättchenförmige, Metallpartikel auf.

Was nun die Größe der verwendeten Metallpartikel anbelangt, so kann diese in weiten Bereichen variieren. Besonders gute Ergebnisse werden jedoch erhalten, wenn die plättchenförmigen Metallpartikel eine Dicke von 50 bis 1.000 nm, insbesondere 60 bis 750 nm, vorzugsweise 80 bis 600 nm, bevorzugt 100 bis 500 nm, aufweisen.

Gleichermaßen ist es von Vorteil, wenn die plättchenförmigen Metallpartikel einen Durchmesser von 1 bis 25 µm, insbesondere 2 bis 20 µm, vorzugsweise 5 bis 18 µm, bevorzugt 5 bis 15 µm, aufweisen.

Falls die Beschichtungszusammensetzung kornförmige, insbesondere sphärische, Metallpartikel aufweist, so ist es bevorzugt, wenn die kornförmigen, insbesondere sphärischen, Metallpartikel Partikeldurchmesser im Bereich von 500 nm bis 20 µm, insbesondere 500 nm bis 10 µm, vorzugsweise 500 nm bis 5 µm, aufweisen.

Weiterhin kann es vorgesehen sein, dass die Zusammensetzung mindestens einen Füllstoff, insbesondere einen inerten Füllstoff, in Mengen von 0,1 bis 10 Gew.-%, insbesondere 0,5 bis 8 Gew.-%, vorzugsweise 0,5 bis 5 Gew.-%, bezogen auf die Zusammensetzung, aufweist. Insbesondere kommen in der Beschichtungszusammensetzung die Füllstoffe zum Einsatz die zuvor mit der ersten Schicht der erfindungsgemäßen Beschichtung aufgezählt wurden.

Was nun den Matrixbildner zur Herstellung der anorganisch basierten Matrix anbelangt, so ist dieser üblicherweise ausgewählt aus Silanen, Polysilanen, Silanhydrolysaten, Polysiloxanen, Silikonaten, Polysilikaten, Titanaten, Polytitanaten und Zirkonaten, insbesondere Silanen, Silanhydrolysaten, Polysiloxanen, Titanaten und Polytitanaten, sowie deren Mischungen.

Weiter wird es darüber hinaus bevorzugt, wenn der Matrixbildner organisch modifiziert ist.

Auch kann es weiterhin vorgesehen sein, dass der Matrixbildner durch Kondensationsreaktionen organischer und/oder anorganischer Gruppen vernetzt und/oder aushärtet. Gleichfalls kann es vorgesehen sein, dass der Matrixbildner durch Polymerisationsreaktionen organischer Gruppen vernetzt und/oder aushärtet. Bevorzugt wird es jedoch, wenn der Matrixbildner durch Kondensationsreaktionen, insbesondere anorganischer Gruppen, vernetzt und/oder aushärtet, wie zuvor beschrieben.

Besonders gute Ergebnisse werden erhalten, wenn der Matrixbildner insbesondere zumindest teilweise mit organischen Resten modifiziert ist. In diesem Zusammenhang hat es sich bewährt, wenn die organischen Reste ausgewählt sind aus Alkyl-, Aryl- und Olefinresten.

Wenn der Matrixbildner Alkylreste enthält, so sind diese üblicherweise ausgewählt aus C₁- bis C₁₀-Alkylresten, insbesondere C₁- bis C₅-Alkylresten, vorzugsweise C₁- bis C₃-Alkylresten, bevorzugt C₁- und/oder C₂-Alkylresten.

Falls der Matrixbildner Arylreste enthält, so sind diese üblicherweise ausgewählt aus C₆- bis C₂₀-Arylresten, insbesondere C₆- bis C₁₅-Arylresten, vorzugsweise C₆- bis C₁₀-Arylresten.

Falls der Matrixbildner Olefinreste enthält, so sind diese üblicherweise ausgewählt aus C₂- bis C₁₀-Olefinresten, insbesondere C₂- bis C₈-Olefinresten, vorzugsweise C₂- bis C₅-Olefinresten, bevorzugt C₂- und/oder C₃-Olefinresten, besonders bevorzugt Vinylresten.

Besonders gute Ergebnisse werden erhalten, wenn der Matrixbildner Methyl- und/oder Ethylreste und/oder Vinylreste enthält.

Darüber hinaus kann es vorgesehen sein, dass die organischen Reste zusätzlich polare chemische Gruppen, insbesondere ausgewählt aus Hydroxy, Ethern, Thiolen, Aminen, Aldehyden, Ketonen und/oder Carbonsäuren, vorzugsweise Hydroxy, Ethern, Aminen und/oder Carbonsäuren, aufweisen.

Gemäß einer Ausführungsform ist der Matrixbildner ausgewählt aus Silanen der allgemeinen Formel I

R₄₋ₙSiXₙ (I)

mit
- R =: Alkyl, insbesondere C₁- bis C₅-Alkyl, vorzugsweise C₁- bis C₃-Alkyl, bevorzugt C₁- und/oder C₂-Alkyl; Aryl, insbesondere C₆- bis C₂₀-Aryl, vorzugsweise C₆- bis C₁₅-Aryl, bevorzugt C₆- bis C₁₀-Aryl;
Olefin, insbesondere terminales Olefin, vorzugsweise C₂- bis C₁₀-Olefin, bevorzugt C₂- bis C₈-Olefin, besonders bevorzugt C₂- bis C₅-Olefin, ganz besonders bevorzugt C₂- und/oder C₃-Olefin, insbesondere bevorzugt Vinyl;
Amin, insbesondere C₂- bis C₁₀-Amin, vorzugsweise C₂- bis C₈-Amin, bevorzugt C₂- bis C₅-Amin, besonders bevorzugt C₂- und/oder C₃-Amin;
Carbonsäure, insbesondere C₂- bis C₁₀-Carbonsäure, vorzugsweise C₂- bis Cs-Carbonsäure, bevorzugt C₂- bis C₅-Carbonsäure, besonders bevorzugt C₂- und/oder C₃-Carbonsäure;
Alkohol, insbesondere C₂- bis C₁₀-Alkohol, vorzugsweise C₂- bis C₈-Alkohol, bevorzugt C₂- bis C₅-Alkohol, besonders bevorzugt C₂- und/oder C₃-Alkohol;
- X =: Halogenid, insbesondere Chlorid und/oder Bromid; Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 1-4, vorzugsweise 2 oder 3.

In diesem Zusammenhang hat es sich bewährt, wenn der Matrixbildner ausgewählt ist aus Silanen der allgemeinen Formel Ia

R₄₋ₙSiXₙ (Ia)

mit
- R =: C₁- bis C₃-Alkyl, insbesondere C₁- und/oder C₂-Alkyl; C₆- bis C₁₅-Aryl, insbesondere C₆- bis C₁₀-Aryl; C₂- und/oder C₃-Olefin, insbesondere Vinyl;
- X =: Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 2 oder 3.

Besonders gute Ergebnisse werden erhalten, wenn der Matrixbildner ausgewählt ist aus Alkylsilanen, insbesondere Trialkoxyalkylsilanen, Dialkoxydialkylsilanen und/oder Alkoxytrialkylsilanen, und/oder Vinylsilanen, insbesondere Trialkoxyvinylsilanen, Dialkoxydivinylsilanen und/oder Alkoxytrivinylsilanen. Die gilt insbesondere für Silane gemäß den allgemeinen Formeln I uns Ia.

Gleichermaßen ist es bevorzugt, wenn der Matrixbildner ausgewählt ist aus Silanhydrolysaten, Polysiloxanen, insbesondere Alkylpolysiloxanen, vorzugsweise C₁- bis C₃-Alkylpolysiloxanen und/oder C₁- bis C₃-Alkoxyalkylpolysiloxanen, und/oder Vinylpolysiloxanen, und Polytitanaten. In diesem Zusammenhang werden besonders gute Ergebnisse erhalten, wenn der Matrixbildner ein gewichtsmittleres Molekulargewicht M_{w} im Bereich von 200 bis 200.000 g/mol, insbesondere 500 bis 150.000 g/mol, vorzugsweise 1.000 bis 100.000 g/mol , bevorzugt 2.000 bis 75.000 g/mol, besonders bevorzugt 5.000 bis 50.000 g/mol, aufweist.

Weiterhin werden gute Ergebnisse erhalten, wenn der Matrixbildner ausgewählt ist aus Titanaten der allgemeinen Formel II

TiX₄ (II)

mit
- X =: Halogenid, insbesondere Chlorid und/oder Bromid; Alkoxy, insbesondere C₁- bis C₈-Alkoxy, vorzugsweise C₁- bis C₆- Alkoxy, bevorzugt C₁- bis C₄- Alkoxy.

In diesem Zusammenhang hat es sich bewährt, wenn der Matrixbildner ausgewählt ist aus Titanaten der allgemeinen Formel IIa

TiX₄ (IIa)

mit
- X =: Alkoxy, insbesondere C₁- bis C₈-Alkoxy, vorzugsweise C₁- bis C₆- Alkoxy, bevorzugt C₁- bis C₄- Alkoxy.

Darüber hinaus ist es gleichfalls möglich, dass der Matrixbildner ausgewählt ist aus Zirkonaten der allgemeinen Formel III

ZrX₄ (III)

mit
- X =: Halogenid, insbesondere Chlorid und/oder Bromid; Alkoxy, insbesondere C₁- bis C₈-Alkyl, vorzugsweise C₁- bis C₆- Alkoxy, bevorzugt C₁- bis C₄- Alkoxy.

Besonders gute Ergebnisse werden hierbei erhalten, wenn der Matrixbildner ausgewählt ist aus Zirkonaten der allgemeinen Formel lila

ZrX₄ (IIIa)

mit
- X =: Alkoxy, insbesondere C₁- bis C₈-Alkyl, vorzugsweise C₁- bis C₆- Alkoxy, bevorzugt C₁- bis C₄- Alkoxy.

Darüber hinaus kann ein Silikonat als Matrixbildner verwendet werden. Besonders gute Ergebnisse werden hierbei erhalten, wenn ein als Silikonat der allgemeinen Formel IV

HO-[Si(R)(OM)-O-]ₙH (IV)

mit
- n =: 1 bis 6, insbesondere 1 bis 3, vorzugsweise 1;
- R =: C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
- M =: einwertiges Metall, insbesondere Alkalimetall, vorzugsweise Natrium oder Kalium;
eingesetzt wird. In diesem Zusammenhang hat es sich bewährt, wenn das Silikonat ausgewählt ist aus Natriummethylsilikonat, Kaliummethylsilikonat, Natriumpropylsilikonat und Kaliumpropylsilikonat.

Weiterhin ist es möglich, dass der Matrixbildner ausgewählt ist aus Siliciumdioxid, insbesondere Kieselsäure, Titandioxid und/oder Zirkoniumoxid. Wenn die Beschichtungszusammensetzung Siliciumdioxid Titandioxid und/oder Zirkoniumoxid als Matrixbildner enthält, so sind diese üblicherweise in Form von Partikeln in der Beschichtungszusammensetzung enthalten, und zwar insbesondere in lediglich geringen Mengen, insbesondere in Mengen von 0,1 bis 10 Gew.-%, vorzugsweise 0,2 bis 5 Gew.-%, vorzugsweise 0,5 bis 2 Gew.-%, bezogen auf die Beschichtungszusammensetzung.

Es werden besonders gute Ergebnisse erhalten, wenn die Beschichtungszusammensetzung mindestens zwei unterschiedliche Matrixbildner, insbesondere zwei reaktive Matrixbildner, umfasst. Unter einem reaktiven Matrixbildner ist damit ein Matrixbildner zu verstehen, welcher über reaktive funktionelle chemische Gruppen verfügt. Dies können beispielsweise hydrolysierbare oder polymerisierbare Gruppen sein. Die funktionellen chemischen Gruppen müssen es erlauben, unter den Vernetzungsbedindungen eine Reaktion mit weiteren Matrixbildnermolekülen bzw. - partikeln einzugehen. Die jeweiligen Matrixbildner sind in ihren Reaktivitäten so auszuwählen, dass eine gleichmäßige Vernetzung stattfindet, welche einen homogenen Einbau von Metallpartikeln und sonstiger Additive ermöglicht.

Besonders gute Ergebnisse werden erhalten, wenn die Beschichtungszusammensetzung mindestens einen Matrixbildner auf Basis einer Siliciumverbindung und einen Matrixbildner auf Basis einer Titanverbindung aufweist.

Üblicherweise weist die Zusammensetzung den Matrixbildner in Mengen von 1 bis 45 Gew.-%, insbesondere insbesondere 2 bis 40 Gew.-%, vorzugsweise 5 bis 30 Gew.-%, bevorzugt 5 bis 20 Gew.-%, bezogen auf Zusammensetzung, auf.

Weiterhin kann es vorgesehen sein, dass die Zusammensetzung mindestens ein organisches Polymer, insbesondere ein inertes Polymer, vorzugsweise ein fluororganisches Polymer, aufweist.

Falls sie Zusammensetzung ein organisches Polymer aufweist, so weist die Zusammensetzung das Polymer in Mengen von 0,1 bis 10 Gew.-%, insbesondere 0,2 bis 5 Gew.-%, vorzugsweise 0,5 bis 1 Gew.-%, bezogen auf die Zusammensetzung, auf.

Besonders gute Ergebnisse werden dabei erhalten, wenn das organische Polymer ausgewählt ist aus Polytetrafluorethen, Polyvinylfluorid, Polyvinylidenfluorid, vorzugsweise Polyvinylidenfluorid.

Was nun die Viskosität der Beschichtungszusammensetzung anbelangt, so kann diese in weiten Bereichen variieren. Es hat sich jedoch bewährt, wenn die Zusammensetzung eine dynamische Viskosität nach Brookfield bei 20 °C im Bereich von 1 bis 50.000 mPas, insbesondere 2 bis 10.000 mPas, vorzugsweise 5 bis 1.000 mPas, bevorzugt 5 bis 500 mPas, besonders bevorzugt 10 bis 100 mPas, aufweist.

Auch kann es darüber hinaus vorgesehen sein, dass die Beschichtungszusammensetzung weitere Additive und/oder Hilfsstoffe enthält. Wenn die Beschichtungszusammensetzung zur Herstellung einer kathodischen Korrosionsschutzschicht weitere Additive und/oder Hilfsstoffe enthält, so sind diese üblicherweise ausgewählt aus der Gruppe von Rheologieadditiven, Konservierungsmitteln, Stabilisatoren, Säuren und/oder Basen, Tensiden, entschäumenden Komponenten, Filmbildnern, Wachsen, biogenen Wirkstoffen, pH-Stabilisatoren und pH-Einstellmitteln.

Weiter kann es vorgesehen sein, dass die Zusammensetzung bei erhöhter Temperatur und/oder durch Bestrahlung vernetzt und/oder aushärtet, insbesondere bei erhöhter Temperatur. Was die Temperaturen anbelangt, bei welcher die Zusammensetzung vernetzt und/oder aushärtet, so kann diese in weiten Bereichen variieren. Es hat sich jedoch bewährt, wenn die Zusammensetzung bei Temperaturen im Bereich von 30 bis 350 °C, vorzugsweise 50 bis 300 °C, bevorzugt 100 bis 250 °C, besonders bevorzugt 100 bis 200 °C, vernetzt und/oder aushärtet. Üblicherweise vernetzt und/oder härtet die Zusammensetzung, insbesondere der Matrixbildner, innerhalb eines Zeitraums von 1 Minute bis 2 Stunden, insbesondere 2 Minuten bis 1 Stunde, vorzugsweise 3 bis 30 Minuten, bevorzugt 4 bis 20 Minuten, besonders bevorzugt 5 bis 15 Minuten, aus. Die Beschichtungszusammensetzungen härten bei erhöhter Temperatur innerhalb kürzester Zeit aus, weshalb beispielsweise in der industriellen Produktion hohe Durchsätze möglich sind.

Gemäß einer weiteren Ausführungsform vernetzt und/oder härtet die Zusammensetzung, insbesondere der Matrixbildner, bei Raumtemperatur aus. Bei Raumtemperatur aushärtende Systeme eignen sich in hervorragender Weise für Substrate, welche aufgrund ihrer Größe nicht erhitzt und/oder bestrahlt werden können, wie beispielsweise Industrieanlagen und/oder Teile von Stahlbauten. Die erfindungsgemäßen Beschichtungen sowie die Beschichtungszusammensetzungen eignen sich in diesem Zusammenhang insbesondere auch zur Erneuerung des Korrosionsschutzes bereits bestehender Anlagen und Bauten.

Wenn die Zusammensetzung bzw. der Matrixbildner bei Raumtemperatur vernetzt bzw. aushärtet, so vernetzt und/oder härtet die Zusammensetzung, insbesondere der Matrixbildner, vorzugsweise in einen Zeitraum von 1 Minute bis 2 Stunden, insbesondere 2 Minuten bis 1 Stunde, vorzugsweise 3 bis 45 Minuten, bevorzugt 5 bis 30 Minuten, aus.

Im Fall der bei Raumtemperatur vernetzenden Zusammensetzungen, insbesondere Matrixbildner, kann es darüber hinaus vorgesehen sein, dass die Vernetzung durch Luftfeuchtigkeit initiiert wird.

Gemäß einer Ausführungsform weist die Beschichtungszusammensetzung einen Feststoffanteil von 95 bis 100 Gew.-%, bezogen auf die Zusammensetzung, auf. Gemäß dieser Ausführungsform liegt die Beschichtungszusammensetzung in Form einer lösemittelfreien und/oder wasserfreien bzw. lösemittelarmen und/oder wasserarmen Ultra-High-Solid-Beschichtungszusammensetzung vor. Vorzugsweise härten die Beschichtungszusammensetzungen mit einem Feststoffanteil von 95 bis 100 Gew.-%, bezogen auf die Zusammensetzung, bei Raumtemperatur und/oder unter Einwirkung von Luftfeuchtigkeit. Der vollständige Verzicht auf Lösemittel ist unter Gesichtspunkten des Umweltschutzes einerseits sowie gesetzlicher Auflagen andererseits bevorzugt.

Üblicherweise liegt die Beschichtungszusammensetzung mit einem Feststoffanteil von 95 bis 100 Gew.-%, bezogen auf die Zusammensetzung, in flüssiger Form vor und härtet vollständig aus bzw. vernetzt vollständig. Sie kann somit wie wasser- und lösemittelbasierte Systeme verarbeitet werden, insbesondere auch durch Sprühauftrag. In ihrer Viskosität entspricht sie den lösemittel- und wasserbasierten Systemen. Als Matrixbildner der Ultra-High-Solid-Beschichtungszusammensetzungen eignen sich in besonderer Weise Alkylpolysiloxanharze, insbesondere Alkoxyalkylsiloxanharze, insbesondere mit den zuvor genannten mittleren gewichtsbezogenen Molekulargewichten M_{w}.

Wenn die Beschichtungszusammensetzung zur Herstellung einer kathodischen Korrosionsschutzschicht als Beschichtungszusammensetzung mit einem Feststoffanteil von 95 bis 100 Gew.-%, bezogen auf die Zusammensetzung, vorliegt, so werden besonders gute Ergebnisse erhalten, wenn die Zusammensetzung mindestens 35 Gew.-%, insbesondere mindestens 50 Gew.-%, vorzugsweise mindestens 70 Gew.-%, bevorzugt mindestens 80 Gew.-%, Metallpartikel, bezogen auf die Zusammensetzung, aufweist.

Gleichermaßen hat es sich bewährt, wenn die Zusammensetzung einen Anteil an Metallpartikeln im Bereich von 35 bis 95 Gew.-%, insbesondere 50 bis 95 Gew.-%, vorzugsweise 70 bis 90 Gew.-%, bevorzugt 80 bis 90 Gew.-%, bezogen auf die Zusammensetzung, aufweist.

Gemäß dieser besonderen Ausführungsform ist es bevorzugt, wenn die Zusammensetzung kornförmige, insbesondere sphärische Metallpartikel, in Mengen von 35 bis 95 Gew.-%, insbesondere 50 bis 90 Gew.-%, vorzugsweise 70 bis 90 Gew.-%, bevorzugt 80 bis 90 Gew.-%, bezogen auf die Beschichtungszusammensetzung, aufweist. In diesem Zusammenhang ist es bevorzugt, wenn die Metallpartikel auf Basis von Zink oder Zinklegierungen, vorzugsweise elementarem Zink, ausgebildet sind.

Darüber hinaus kann es gemäß dieser Ausführungsform vorgesehen sein, dass die Beschichtungszusammensetzung plättchenförmige Metallpartikel, insbesondere Zinklamellen, in Mengen von 0,1 bis 50 Gew.-%, insbesondere 0,2 bis 25 Gew.-%, vorzugsweise 0,3 bis 10 Gew.-%, bevorzugt 0,5 bis 5 Gew.-%, bezogen auf die Zusammensetzung, aufweist. Hierbei hat es sich als vorteilhaft erwiesen, wenn die plättchenförmigen Metallpartikel auf Basis von Zink oder Zinklegierungen, vorzugsweise elementarem Zink, ausgebildet sind.

Darüber hinaus ist es im Allgemeinen gemäß dieser Ausführungsform vorgesehen, dass die Zusammensetzung den Matrixbildner in Mengen von 5 bis 65 Gew.-%, insbesondere 5 bis 50 Gew.-%, vorzugsweise 10 bis 30 Gew.-%, bevorzugt 10 bis 20 Gew.-%, bezogen auf die Zusammensetzung, aufweist.

Für weitere Einzelheiten bezüglich der Beschichtungszusammensetzung zur Herstellung einer kathodischen Korrosionsschutzbeschichtung kann auf die vorherigen Ausführungen zu der erfindungsgemäßen Beschichtung verwiesen werden.

Eine weitere Beschichtungszusammensetzung eignet sich zur Herstellung einer Sauerstoffbarrierebeschichtung, enthaltend einen anorganisch basierten Matrixbildner und gegebenenfalls Hilfsstoffe und Additive.

Im Allgemeinen wird diese Beschichtungszusammensetzung mit einer Schichtdicke im Bereich von 0,1 bis 60 µm, insbesondere 0,5 bis 50 µm, vorzugsweise 0,7 bis 35 µm, bevorzugt 1 bis 10 µm, besonders bevorzugt 1 bis 5 µm, ganz besonders bevorzugt 1 bis 3 µm, auf ein Substrat aufgebracht.

Üblicherweise liegt die Beschichtungszusammensetzung in Form einer Dispersion vor.

In diesem Zusammenhang kann es vorgesehen sein, dass die Zusammensetzung organische Lösemittel und/oder Wasser enthält und/oder dass die Zusammensetzung als Beschichtungszusammensetzung mit einem Feststoffanteil von 95 bis 100 Gew.-%, bezogen auf die Zusammensetzung, vorliegt. Als organische Lösemittel kommen alle geeigneten Lösemittel in Betracht, insbesondere solche, welche in Zusammenhang mit der Beschichtungszusammensetzung zur Herstellung einer kathodischen Korrosionsschutzschicht erwähnt werden.

Vorzugsweise liegt die zweite Beschichtungszusammensetzung als wasserbasiertes System oder als System mit einem Feststoffgehalt von 95 bis 100 Gew.-%, bezogen auf die Zusammensetzung, bevorzugt als wasserbasiertes System, vor. Wasserbasierte Systeme schonen die Umwelt und es müssen keine aufwendigen Vorrichtungen zum Sammeln bzw. zur Rückgewinnung der organischen Lösemittel bereitgestellt werden. Darüber hinaus ermöglicht die Verwendung wasserbasierter Systeme auch vor dem Hintergrund des Arbeitsschutzes einen breiten Einsatz der Beschichtungszusammensetzung, da Brandgefahr ausgeschlossen werden kann und keine gesundheitsschädlichen organischen Lösemittel in die Umgebung, insbesondere die Atemluft, entweichen.

Wenn die Beschichtungszusammensetzung organische Lösemittel und/oder Wasser enthält, so weist die Beschichtungszusammensetzung organische Lösemittel und/oder Wasser in Mengen von 30 bis 90 Gew.-%, insbesondere 40 bis 80 Gew.-%, vorzugsweise 50 bis 75 Gew.-%, bezogen auf die Beschichtungszusammensetzung, auf. Die besten Ergebnisse, insbesondere im Hinblick auf die Temperaturbeständigkeit der resultierenden Beschichtung, werden jedoch mit wasserbasierten Systemen erhalten, insbesondere wenn die Beschichtungszusammensetzung nicht mehr als 10 Gew.-%, insbesondere nicht mehr als 5 Gew.-%, vorzugsweise nicht mehr als 3 Gew.-%, bevorzugt nicht mehr als 1 Gew.-%, organische Lösemittel, bezogen auf die Beschichtungszusammensetzung, aufweist.

Was die Viskosität der Beschichtungszusammensetzung anbelangt, so kann diese naturgemäß in weiten Bereichen variieren. Besonders gute Ergebnisse werden jedoch erzielt, wenn die Beschichtungszusammensetzung eine dynamische Viskosität nach Brookfield bei 20 °C im Bereich von 1 bis 50.000 mPas, insbesondere 2 bis 10.000 mPas, vorzugsweise 5 bis 1.000 mPas, bevorzugt 5 bis 500 mPas, besonders bevorzugt 10 bis 100 mPas, aufweist.

Darüber hinaus kann es vorgesehen sein, dass die Beschichtungszusammensetzung den Matrixbildner in Mengen von 10 bis 100 Gew.-%, insbesondere 15 bis 90 Gew.-%, vorzugsweise 20 bis 80 Gew.-%, bevorzugt 25 bis 70 Gew.-%, besonders bevorzugt 20 bis 60 Gew.-%, bezogen auf die Zusammensetzung, aufweist.

Gemäß einer Ausführungsform der Beschichtungszusammensetzung ist der Matrixbildner ausgewählt aus Silanen, Polysilanen, Silanhydrolysaten, Polysiloxanen, Silikonaten, Silikaten, Titanaten, Polytitanaten und Zirkonaten, insbesondere Silanen, Silanhydrolysaten, Polysiloxanen und Silikaten, sowie deren Mischungen. Die zuvor genannten Matrixbildner reagieren zu den entsprechenden anorganischen Oxiden, insbesondere zu den Oxiden des Siliciums, Titans bzw. Zirkoniums, wobei bei der Ausbildung der Gaskorrosionsschicht siliciumbasierte Reagenzien bevorzugt sind.

Gemäß einer bevorzugten Ausführungsform ist der Matrixbildner der Beschichtungszusammensetzung zur Herstellung einer Sauerstoffbarriereschicht organisch modifiziert.

Im Allgemeinen vernetzt und/oder härtet der Matrixbildner der Beschichtungszusammensetzung zur Herstellung einer Sauestoffbarriereschicht durch Kondensationsreaktionen anorganischer und/oder organischer Gruppen und/oder durch Polymerisationsreaktion organischer chemischer Gruppen aus. Bevorzugt wird es jedoch, wenn der Matrixbildner durch Kondensationsreaktionen anorganischer Gruppen vernetzt und/oder aushärtet. Auf diese Weise sind besonders widerstandsfähige, gasdichte und insbesondere oxidationsstabile Sauerstoffbarriereschichten zugänglich. Eine gewisse, geringe organische Modifizierung der Matrixbildner ist jedoch von Vorteil, da die organischen Gruppen der Beschichtung mehr Flexibilität verleihen.

So wird es daher bevorzugt, wenn der Matrixbildner mittels organischer Reste modifiziert ist. Vorteilhafter Weise sind die organischen Reste dabei ausgewählt aus Alkyl-, Aryl- und Olefinresten, insbesondere Alkyl- und Arylresten, sowie deren Mischungen.

Wenn die Beschichtungszusammensetzung zur Herstellung einer Gaskorrosionsschicht Alkylreste aufweist, so hat es sich bewährt, wenn die Alkylreste C₁- bis C₁₀-Alkylreste, insbesondere C₁- bis C₅-Alkylreste, vorzugsweise C₁- bis C₃-Alkylreste, bevorzugt C₁- und/oder C₂-Alkylreste, sind.

Gleichermaßen ist es von Vorteil, wenn die Arylreste C₆- bis C₂₀-Arylreste, insbesondere C₆- bis C₁₅-Arylreste, vorzugsweise C₆- bis C₁₀-Arylreste, sind.

Darüber hinaus kann es auch vorgesehen sein, dass die Olefinreste C₂- bis C₁₀-Olefinreste, insbesondere C₂- bis C₈-Olefinreste, insbesondere C₂- bis C8-Olefinreste, vorzugsweise C₂- bis C₅-Olefinreste, bevorzugt C₂- und/oder C₃-Olefinreste, besonders bevorzugt Vinylreste, sind.

Es hat sich jedoch als besonders günstig erwiesen, wenn die organischen Reste Methyl- und/oder Ethylreste und/oder Methylphenylreste sind.

Es werden gute Ergebnisse erhalten, wenn der Matrixbildner ausgewählt ist aus Silanen der allgemeinen Formel I

R₄₋ₙSiXₙ (I)

mit
- R =: Alkyl, insbesondere C₁- bis C₅-Alkyl, vorzugsweise C₁- bis C₃-Alkyl, bevorzugt C₁- und/oder C₂-Alkyl; Aryl, insbesondere C₆- bis C₂₀-Aryl, vorzugsweise C₆- bis C₁₅-Aryl, bevorzugt C₆- bis C₁₀-Aryl; Olefin, insbesondere terminales Olefin, vorzugsweise C₂- bis C₁₀-Olefin, bevorzugt C₂- bis C₈-Olefin, besonders bevorzugt C₂- bis C₅-Olefin, ganz besonders bevorzugt C₂- und/oder C₃-Olefin, insbesondere bevorzugt Vinyl; Amin, insbesondere C₂- bis C₁₀-Amin, vorzugsweise C₂- bis C₈-Amin, bevorzugt C₂- bis C₅-Amin, besonders bevorzugt C₂- und/oder C₃-Amin; Carbonsäure, insbesondere C₂- bis C₁₀-Carbonsäure, vorzugsweise C₂- bis Cs-Carbonsäure, bevorzugt C₂- bis C₅-Carbonsäure, besonders bevorzugt C₂-und/oder C₃-Carbonsäure; Alkohol, insbesondere C₂- bis C₁₀-Alkohol, vorzugsweise C₂- bis C₈-Alkohol, bevorzugt C₂- bis C₅-Alkohol, besonders bevorzugt C₂- und/oder C₃-Alkohol;
- X =: Halogenid, insbesondere Chlorid und/oder Bromid; Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 1 bis 4, vorzugsweise 2 oder 3.

Auch werden gute Ergebnisse erhalten, wenn der Matrixbildner ausgewählt ist aus Silanen der allgemeinen Formel Ia

R₄₋ₙSiXₙ (la)

mit
- R =: C₁- bis C₃-Alkyl, insbesondere C₁- und/oder C₂-Alkyl; C₆- bis C₁₅-Aryl, insbesondere C₆- bis C₁₀-Aryl; C₂- und/oder C₃-Olefin, insbesondere Vinyl;
- X =: Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 2 oder 3.

Bevorzugt weist der Matrixbildner der Beschichtungszusammensetzung Alkylsilane, insbesondere Trialkoxyalkylsilane, Dialkoxydialkysilane und/oder Alkoxytralkylsilane, und/oder Arylsilane, insbesondere Trialkoxyarylsilane, Dialkoxydiarylsilane und/oder Alkoxytriarylsilane, auf.

Weiterhin werden sehr gute Ergebnisse erhalten, wenn der Matrixbildner ausgewählt ist aus Silanhydrolysaten, Polysiloxanen, insbesondere Alkylpolysiloxanen, vorzugsweise C₁- bis C₃-Alkylpolysiloxanen und/oder C₁- bis C₃-Alkoxyalkylpolysiloxan, und/oder Arylpolysiloxanen, vorzugsweise C₆- bis C₁₀-Arylpolysiloxanen und C₆- bis C₁₀-Alkoxyarylpolysiloxanen. In diesem Zusammenhang wird es bevorzugt, wenn der Matrixbildner ein gewichtsmittlere Molekulargewicht M_{W} im Bereich von 200 bis 200.000 g/mol, insbesondere 500 bis 150.000 g/mol, vorzugsweise 1.000 bis 100.000 g/mol , bevorzugt 2.000 bis 75.000 g/mol, besonders bevorzugt 5.000 bis 50.000 g/mol, aufweist.

Hierbei hat es sich bewährt, wenn die Beschichtungszusammensetzung als Matrixbildner Alkoxymethylsilikonharze und/oder Alkoxymethylphenylsilikonharze enthält.

Darüber hinaus kann es vorgesehen sein, dass der Matrixbildner ausgewählt ist aus Titanaten der allgemeinen Formel II

TiX₄ (II)

mit
- X =: Halogenid, insbesonder Chlorid und/oder Bromid; Alkoxy, insbesondere C₁- bis C₈-Alkoxy, vorzugsweise C₁- bis C₆- Alkoxy, bevorzugt C₁- bis C₄- Alkoxy.

In diesem Zusammenhang hat es sich bewährt, wenn der Matrixbildner ausgewählt ist aus Titanaten der allgemeinen Formel IIa

TiX₄ (IIa)

mit
- X =: Alkoxy, insbesondere C₁- bis C₈-Alkoxy, vorzugsweise C₁- bis C₆- Alkoxy, bevorzugt C₁- bis C₄- Alkoxy.

Gleichermaßen kann es vorgesehen sein, dass der Matrixbildner ausgewählt ist aus Zirkonaten der allgemeinen Formel III

ZrX₄ (III)

mit
- X =: Halogenid, insbesondere Chlorid und/oder Bromid; Alkoxy, insbesondere C₁- bis C₈-Alkoxy, vorzugsweise C₁- bis C₆- Alkoxy, bevorzugt C₁- bis C₄- Alkoxy.

Hierbei werden besonders gute Ergebnisse erhalten, wenn der Matrixbildner ausgewählt ist aus Zirkonaten der allgemeinen Formel lila

ZrX₄ (IIIa)

mit
- X =: Alkoxy, insbesondere C₁- bis C₈-Alkoxy, vorzugsweise C₁- bis C₆- Alkoxy, bevorzugt C₁- bis C₄- Alkoxy.

Darüber hinaus kann ein Silikonat als Matrixbildner verwendet werden. Besonders gute Ergebnisse werden hierbei erhalten, wenn ein als Silikonat der allgemeinen Formel IV

HO-[Si(R)(OM)-O-]ₙH (IV)

mit
- n =: 1 bis 6, insbesondere 1 bis 3, vorzugsweise 1;
- R =: C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
- M =: einwertiges Metall, insbesondere Alkalimetall, vorzugsweise Natrium oder Kalium;
eingesetzt wird. In diesem Zusammenhang hat es sich bewährt, wenn das Silikonat ausgewählt ist aus Natriummethylsilikonat, Kaliummethylsilikonat, Natriumpropylsilikonat und Kaliumpropylsilikonat.

Gleichfall ist es möglich, dass der Matrixbildner ausgewählt ist aus Polysilikaten, insbesondere Wasserglas, vorzugsweise Natrium- und/oder Kaliumwasserglas, oder Aluminiumdihydrogenphosphat. Mit den vorgenannten Matrixbildnern lassen sich vollständig kohlenstofffreie Matrices mit guten mechanischen Eigenschaften lassen sich erhalten.

Gleichermaßen kann es vorgesehen sein, dass der Matrixbildner ausgewählt ist aus Kieselsäure, Titandioxid und Zirkoniumoxid, wobei diese Matrixbildner üblicherweise in Partikelform vorliegen und insbesondere in geringen Mengen, vorzugsweise in Mengen von 0,1 bis 10 Gew.-%, bevorzugt 1 bis 5 Gew.-%, bezogen auf die Beschichtungszusammensetzung, eingesetzt werden. Falls Kieselsäure, Titandioxid und/oder Zirkoniumoxid als Matrixbildner eingesetzt werden, so weist die Beschichtungszusammensetzung üblicherweise mindestens einen weiteren Matrixbildner auf um die notwenige Kohäsion der Beschichtung zu gewährleisten.

Zudem ist es möglich, dass die Beschichtungszusammensetzung mehrere unterschiedliche Matrixbildner, insbesondere reaktive Matrixbildner, umfasst. Besonders gute Ergebnisse werden in diesem Zusammenhang erhalten, wenn die Beschichtungszusammensetzung ausschließlich Matrixbildner auf Siliciumbasis aufweist.

Gemäß einer Ausführungsform ist es vorgesehen, dass die Beschichtungszusammensetzung Metallpartikel aufweist.

Eine bevorzugte Beschichtungszusammensetzung enthält folglich
(a) mindestens einen anorganisch basierten Matrixbildner,
(b) Metallpartikel und
(c) gegebenenfalls Hilfsstoffe und Additive.

Wenn die Beschichtungszusammensetzung zur Herstellung einer Gaskorrosionsschicht Metallpartikel aufweist, so kann deren Gehalt in weiten Bereichen variieren. Es hat sich jedoch bewährt, wenn die zweite Beschichtungszusammensetzung mindestens 1 Gew.-%, insbesondere mindestens 2 Gew.-%, vorzugsweise mindestens 5 Gew.-%, Metallpartikel, bezogen auf die Zusammensetzung, aufweist.

Gleichermaßen werden besonders gute Ergebnisse erhalten, wenn die zweite Beschichtungszusammensetzung einen Anteil an Metallpartikeln im Bereich von 1 bis 50 Gew.-%, insbesondere 2 bis 30 Gew.-%, vorzugsweise 5 bis 20 Gew.-%, bevorzugt 5 bis 15 Gew.-%, bezogen auf die Zusammensetzung, aufweist.

In diesem Zusammenhang kann es insbesondere vorgesehen sein, dass die Zusammensetzung plättchenförmige und/oder kornförmige, insbesondere sphärische, Metallpartikel, vorzugsweise plättchenförmige, Metallpartikel, aufweist, insbesondere wie zuvor beschrieben.

Besonders gute Ergebnisse werden erhalten, wenn die Zusammensetzung plättchenförmige Metallpartikel auf Basis von Zink, Aluminium und/oder Magnesium sowie deren Legierungen, vorzugsweise plättchenförmige Aluminiumpartikel, enthält.

Im Allgemeinen ist es vorgesehen, dass die Aditive und/oder Hilfsstoffe der Beschichtungszusammensetzung ausgewählt sind aus der Gruppe von Rheologieadditiven, Konservierungsmitteln, Stabilisatoren, Säuren und/oder Basen, Tensiden, entschäumenden Komponenten, Filmbildnern, Wachsen, organischen UV-Absorbern, biogenen Wirkstoffen, Verlaufsmitteln, Dispergierhilfsmitteln, Emulgatoren, Netzmitteln, Füllstoffen, pH-Stabilisatoren und pH-Einstellmitteln.

So kann es darüber hinaus vorgesehen sein, dass die Zusammensetzung bei erhöhter Temperatur und/oder durch Bestrahlung, vorzugsweise bei erhöhter Temperatur, vernetzt und/oder aushärtet. Falls die Zusammensetzung bei erhöhter Temperatur vernetzt, so kann die Temperatur, bei welcher die Zusammensetzung vernetzt bzw. aushärtet, in weiten Bereichen variieren. Besonders gute Ergebnisse werden jedoch erhalten, wenn die Zusammensetzung bei Temperaturen im Bereich von 10 bis 250 °C, vorzugsweise 15 bis 150 °C, bevorzugt 20 bis 100 °C, aushärtet und/oder vernetzt. Es ist somit möglich, bei Raumtemperatur, insbesondere im Temperaturbereich von 20 bis 30 °C, härtende bzw. vernetzende Systeme bereitzustellen. Bei Raumtemperatur härtende bzw. vernetzende Systeme besitzen den Vorteil, dass keine besondere Ausrüstung bzw. Vorrichtung zur Aushärtung bzw. Vernetzung der Beschichtungszusammensetzung benötigt wird.

Falls die Zusammensetzung bei erhöhter Temperatur vernetzt bzw. aushärtet, so vernetzt bzw. härtet die Zusammensetzung üblicherweise innerhalb eines Zeitraums von 1 Minute bis 2 Stunden, insbesondere 2 Minuten bis 1 Stunde, vorzugsweise 3 bis 30 Minuten, bevorzugt 4 bis 20 Minuten, besonders bevorzugt 5 bis 15 Minuten, aus.

Gleichermaßen kann es jedoch auch vorgesehen sein, dass die Zusammensetzung bei Raumtemperatur vernetzt und/oder aushärtet. Diese Ausführungsform ist insbesondere von Vorteil, wenn die beschichteten Substrate aufgrund ihrer Größe nicht in einen Ofen verbracht oder mittels eines Heizstrahlers aufgeheizt werden können. Gleichfalls können größere Mengen Energie eingespart werden.

Wenn die Zusammensetzung bei Raumtemperatur vernetzt und/oder aushärtet, so vernetzt und/oder härtet die Zusammensetzung üblicherweise in einen Zeitraum von 1 Minute bis 2 Stunden, insbesondere 2 Minuten bis 1 Stunde, vorzugsweise 3 bis 45 Minuten, bevorzugt 5 bis 30 Minuten, aus.

Es werden wasserbasierte und bei Raumtemperatur vernetzende Beschichtungszusammensetzungen für die Herstellung der Gaskorrosionsschicht bevorzugt.

Gemäß einer Ausführungsform weist die Beschichtungszusammensetzung zur Herstellung einer Gaskorrosionsschicht einen Feststoffanteil von 95 bis 100 Gew.-%, bezogen auf die Zusammensetzung, auf. Gemäß dieser besonderen Ausführungsform ist die Beschichtungszusammensetzung als lösemittelfreie bzw. lösemittelarme Ultra-High-Solid-Beschichtungszusammensetzung ausgebildet. Die Beschichtungszusammensetzung mit einem Feststoffanteil von 95 bis 100 Gew.-%, bezogen auf die Zusammensetzung, vernetzen üblicherweise unter Einwirkung von Luftfeuchtigkeit als Initiator.

Wie zuvor bereits ausgeführt, sind Beschichtungszusammensetzungen mit einem Feststoffanteil von 95 bis 100 Gew.-% vorteilhafter Weise flüssig ausgebildet und unterscheiden sich ihrer Viskosität nicht von wasser- und/oder lösemittelbasierten Systemen. Zur Einstellung der Viskosität kann die Beschichtungszusammensetzung mit einem Feststoffanteil von 95 bis 100 Gew.-% jedoch bis zum 5 Gew.-% Lösemittel oder Wasser enthalten.

Auch hat es sich bewährt, wenn gemäß dieser besonderen Ausführungsform die Beschichtungszusammensetzung den Matrixbildner in Mengen von 50 bis 100 Gew.-%, insbesondere 60 bis 100 Gew.-%, vorzugsweise 70 bis 95 Gew.-%, bevorzugt 75 bis 90 Gew.-%, bezogen auf die Beschichtungszusammensetzung, aufweist.

Gleichermaßen kann es gemäß dieser Ausführungsform vorgesehen sein, dass die Beschichtungszusammensetzung mindestens 5 Gew.-%, insbesondere mindestens 10 Gew.-%, vorzugsweise mindestens 15 Gew.-%, Metallpartikel, bezogen auf die Beschichtungszusammensetzung, aufweist.

Weiterhin werden gute Ergebnisse gemäß dieser besonderen Ausführungsform erhalten, wenn die Beschichtungszusammensetzung einen Anteil an Metallpartikeln im Bereich von 5 bis 50 Gew.-%, insbesondere 10 bis 30 Gew.-%, vorzugsweise 15 bis 25 Gew.-%, bezogen auf Beschichtungszusammensetzung, aufweist.

Für weitere Einzelheiten kann auf die Ausführungen zu den übrigen Aspekten verwiesen werden, welche in Bezug auf die Beschichtungszusammensetzung zur Herstellung einer Gaskorrosionsschicht entsprechend gelten.

Wiederum weiterer Gegenstand der vorliegenden Erfindung - gemäß einem **zweiten** Aspekt der vorliegenden Erfindung - ist ein Verfahren zur Herstellung einer Hochtemperaturkorrosionsschutzbeschichtung auf einem metallischen Substrat, wobei
(A) in einem ersten Verfahrensschritt eine Korrosionsschutzbeschichtung und/oder Beschichtungszusammensetzung zur Herstellung einer kathodischen Korrosionsschutzbeschichtung auf das metallische Substrat aufgebracht wird, so dass eine kathodischen Korrosionsschutzschicht erhalten wird, wobei die erste Schicht
   (i) auf Basis einer durch Elektrolyse oder Feuerverzinkung aufgebrachten Zinkschicht ausgebildet ist oder
   (ii) auf Basis mindestens einer Metallpartikel enthaltenden anorganisch basierten Matrix ausgebildet ist, wobei die erste Schicht (3) einen Anteil an Metallpartikeln im Bereich von 50 bis 95 Gew.-%, bezogen auf die erste Schicht, aufweist, und wobei die anorganisch basierte Matrix Oxide des Siliciums, Titans und/oder Zirkoniums enthält, wobei die Matrix mittels organischer Reste modifiziert ist, wobei die anorganisch basierte Matrix durch Kondensationsreaktionen anorganischer oder organischer Gruppen und/oder Polymerisationsreaktionen organischer Gruppen aus Silanen, Polysilanen, Silanhydrolysaten, Polysiloxanen, Silikonaten, Titanaten, Polytitanaten, Zirkonaten und deren Mischungen erhältlich ist,
   und
(B) in einem nachfolgenden zweiten Verfahrensschritt eine zweite Korrosionsschutzbeschichtung zur Herstellung einer Sauerstoffbarriereschicht auf das Substrat auf die kathodische Korrosionsschutzschicht aufgebracht wird, wobei die zweite Schicht eine anorganisch basierte Matrix aufweist, wobei die anorganisch basierte Matrix durch Oxide des Siliciums, Titans und/oder Zirkoniums gebildet wird, wobei die zweite Schicht Metallpartikel, wobei die zweite Schicht einen Anteil an Metallpartikeln im Bereich von 35 bis 95 Vol.-%, aufweist und wobei die Metallpartikel Aluminiumpartikel sind.

Üblicherweise wird das erfindungsgemäße Verfahren derart durchgeführt, dass in Verfahrensschritt (A) die Korrosionsschutzbeschichtung und/oder die Beschichtungszusammensetzung mit einer Schichtdicke im Bereich von 0,1 bis 180 µm, insbesondere 0,5 bis 150 µm, vorzugsweise 1 bis 140 µm, bevorzugt 2 bis 90 µm, besonders bevorzugt 3 bis 40 µm, auf das Substrat aufgebracht wird.

Falls in Verfahrensschritt (A) die Beschichtungszusammensetzung in Form einer Zinklamellenbeschichtung auf das Substrat aufgebracht ist, so weist die Beschichtung üblicherweise Schichtdicken im Bereich von 0,1 bis 25 µm, insbesondere 1 bis 15 µm, vorzugsweise 2 bis 10 µm, bevorzugt 4 bis 8 µm, auf.

Im Rahmen der vorliegenden Erfindung ist es möglich, dass in Verfahrensschritt (A) eine Schicht aus metallischem Zink als kathodische Korrosionsschicht auf das Substrat aufgebracht wird, nämlich durch Feuerverzinkung oder galvanische Verzinkung.

Gemäß einer bevorzugten Ausführungsform der vorliegenden Erfindung wird in Verfahrensschritt (A) eine erste Metallpartikel enthaltende Beschichtungszusammensetzung, insbesondere wie zuvor beschrieben, zur Erzeugung der kathodischen Korrosionsschutzschicht auf das Substrat aufgebracht und anschließend vernetzt und/oder ausgehärtet.

Was nun den eigentlichen Beschichtungsvorgang in Verfahrensschritt (A) anbelangt, so kann dieser auf vielfältige Art und Weise ausgeführt werden. Es hat sich jedoch im Rahmen der vorliegenden Erfindung als vorteilhaft erwiesen, wenn in Verfahrensschritt (A) die Korrosionsschutzbeschichtung und/oder die Beschichtungszusammensetzung mittels Sprühen, Tauchen, Schleudern, Tauchschleudern, Rakeln oder Walzen, insbesondere mittels Sprühen, Tauchen, Schleudern oder Tauchschleudern, vorzugsweise mittels Sprühen, auf das Substrat aufgebracht wird. Sprühen eignet sich insbesondere hervorragend bei größeren Objekten, während bei kleineren Objektiven, wie beispielsweise Schrauben, das Tauchschleudern bevorzugt wird, da durch Tauchschleudern eine Vielzahl zu beschichtender Substrate gleichzeitig beschichtet werden kann.

Im Rahmen der vorliegenden Erfindung kann es vorgesehen sein, dass in Verfahrensschritt (A) die Beschichtungszusammensetzung bei Raumtemperatur vernetzt oder ausgehärtet wird. Falls die Beschichtungszusammensetzung bei Raumtemperatur vernetzt und/oder ausgehärtet wird, so geschieht dies üblicherweise in den zuvor genannten Zeiträumen.

Gleichermaßen ist es jedoch auch möglich, dass in Verfahrensschritt (A) die Beschichtungszusammensetzung bei erhöhter Temperatur und/oder durch Bestrahlung, vorzugsweise unter erhöhter Temperatur, vernetzt und/oder ausgehärtet wird. In diesem Zusammenhang hat es sich als vorteilhaft erwiesen, wenn die Beschichtungszusammensetzung bei Temperaturen im Bereich von 30 bis 350 °C, vorzugsweise 50 bis 300 °C, bevorzugt 100 bis 250 °C, besonders bevorzugt 150 bis 200 °C, ausgehärtet bzw. vernetzt wird.

Falls die Beschichtungszusammensetzung bei erhöhter Temperatur vernetzt und/oder ausgehärtet wird, so geschieht dies üblicherweise in den zuvor genannten Zeiträumen.

Im Rahmen der vorliegenden Erfindung wird Verfahrensschritt (B) üblicherweise derart durchgeführt, dass die Korrosionsschutzbeschichtung und/oder die Beschichtungszusammensetzung mit einer Schichtdicke im Bereich von 0,1 bis 60 µm, insbesondere 0,5 bis 50 µm, vorzugsweise 0,7 bis 35 µm, bevorzugt 1 bis 10 µm, besonders bevorzugt 1 bis 5 µm, ganz besonders bevorzugt 1 bis 3 µm, auf das Substrat aufgebracht wird.

Im Allgemeinen weist die zweite Schicht der erfindungsgemäßen Beschichtung eine Schichtdicke im Bereich von 0,1 bis 50 µm, insbesondere 0,5 bis 40 µm, vorzugsweise 0,7 bis 30 µm, bevorzugt 1 bis 10 µm, besonders bevorzugt 1 bis 5 µm, ganz besonders bevorzugt 1 bis 3 µm, auf.

Besonders gute Ergebnisse werden erhalten, wenn der Verfahrensschritt (B) eine Beschichtungszusammensetzung, insbesondere wie zuvor beschrieben, zur Erzeugung der Gaskorrosionsschicht auf das Substrat aufgebracht wird und anschließend vernetzt und/oder ausgehärtet wird.

Üblicherweise wird in Verfahrensschritt (B) die Beschichtung derart ausgeführt, dass die Sauerstoffbarrierebeschichtung und/oder die Beschichtungszusammensetzung mittels Sprühen, Tauchen, Schleudern, Tauchschleudern, Rakeln oder Walzen, insbesondere mittels Sprühen, Tauchen, Schleudern oder Tauchschleudern, vorzugsweise mittels Sprühen auf das Substrat, insbesondere die kathodische Korrosionsschutzschicht, aufgebracht wird.

Im Rahmen der vorliegenden Erfindung ist es bevorzugt, wenn in Verfahrensschritt (B) die Beschichtungszusammensetzung bei Raumtemperatur vernetzt und/oder ausgehärtet wird. In diesem Zusammenhang wird der Vernetzungs- und/oder Aushärtevorgang üblicherweise für einen Zeitraum von 1 Minute bis 2 Stunden, insbesondere 1 Minute bis 60 Minuten, vorzugsweise 3 bis 45 Minuten, bevorzugt 5 bis 30 Minuten, durchgeführt.

Im Rahmen der vorliegenden Erfindung kann es jedoch auch vorgesehen sein, dass in Verfahrensschritt (B) die Beschichtungszusammensetzung bei erhöhter Temperatur und/oder durch Bestrahlung, vorzugsweise unter erhöhter Temperatur, vernetzt und/oder ausgehärtet wird. Falls die Beschichtungszusammensetzung in Verfahrensschritt (B) bei erhöhter Temperatur vernetzt bzw. ausgehärtet wird, so liegen dei Temperaturen üblicherweise im Bereich von 30 bis 350 °C, vorzugsweise 50 bis 150 °C, bevorzugt 40 bis 200 °C,

Hierbei wird es bevorzugt, wenn die Beschichtungszusammensetzung innerhalb eines Zeitraums von 1 Minute bis 2 Stunden, insbesondere 2 Minuten bis 1 Stunde, vorzugsweise 3 bis 30 Minuten, bevorzugt 4 bis 20 Minuten, besonders bevorzugt 5 bis 15 Minuten, vernetzt und/oder ausgehärtet wird.

Darüber hinaus kann es im Rahmen der vorliegenden Erfindung vorgesehen sein, dass in einem vorbereitenden, dem ersten Verfahrensschritt (A) vorgelagerten Verfahrensschritt das Substrat für die Beschichtung vorbereitet wird.

In diesem Zusammenhang hat es sich als vorteilhaft erwiesen, wenn das Substrat gereinigt, insbesondere entfettet, wird. Dies kann beispielsweise durch Behandlung mit organischen Lösemitteln, Strahlen, Schmirgeln, Beizen, insbesondere mit Säuren und/oder Laugen, vorzugsweise durch Behandlung mit organischen Lösemitteln, Strahlen und/oder Schmirgeln, geschehen. Eine Behandlung mit organischen Lösemitteln, Strahlen bzw. Schmirgeln beugt einer Wasserstoffversprödung vor, welche infolge einer Behandlung mit Säuren auftreten kann.

Gemäß einer besonderen Ausführungsform der vorliegenden Erfindung kann es vorgesehen sein, dass vor Aufbringung der kathodischen Korrosionsschutzbeschichtung und/oder der Beschichtungszusammensetzung in Verfahrensschritt (A) eine Haftvermittlerschicht auf das Substrat aufgebracht wird, insbesondere nach vorher erfolgter Reinigung des Substrates.

Eine Haftvermittlerschicht verbessert die Haftung zwischen der erfindungsgemäßen Beschichtung und dem Substrat, vermindert jedoch auch den elektrischen Kontakt zwischen der kathodischen Korrosionsschutzschicht und dem Substrat. Es hat sich jedoch gezeigt, dass im Rahmen der vorliegenden Erfindung spezielle Haftvermittlerschichten bzw. Grundierungen verwendet werden können, ohne dass eine Verringerung der kathodischen Schutzwirkung beobachtet wird.

Im Rahmen der vorliegenden Erfindung ist es bevorzugt, wenn die Haftvermittlerschicht in Form einer Konversionsschicht durch Behandlung des Substrats mit einer Chrom(III)-, Titan- und/oder Zirkoniumverbindungen enthaltende Lösung erzeugt wird. Derartige Konversionsschichten sind einerseits gute Haftvermittler, vermindern andererseits jedoch den kathodischen Korrosionsschutz nicht oder zumindest nur in untergeordnetem Maße. Gleichfalls ist es möglich, dass die Haftvermittlerschicht durch Phosphatierung, insbesondere Eisenphosphatierung oder Zinkphosphatierung, erzeugt wird. Die Haftvermittlerschicht kann im Rahmen der vorliegenden Erfindung auch durch Behandlung mit silikatbasierten Vorbehandlungssystemen oder geeigneten Silanen erzeugt werden.

Für weitergehende Einzelheiten zu diesem Erfindungsaspekt kann auf die vorhergehenden Ausführungen zu den übrigen Erfindungsaspekten verwiesen werden, welche in Bezug auf das erfindungsgemäße Verfahren entsprechend gelten.

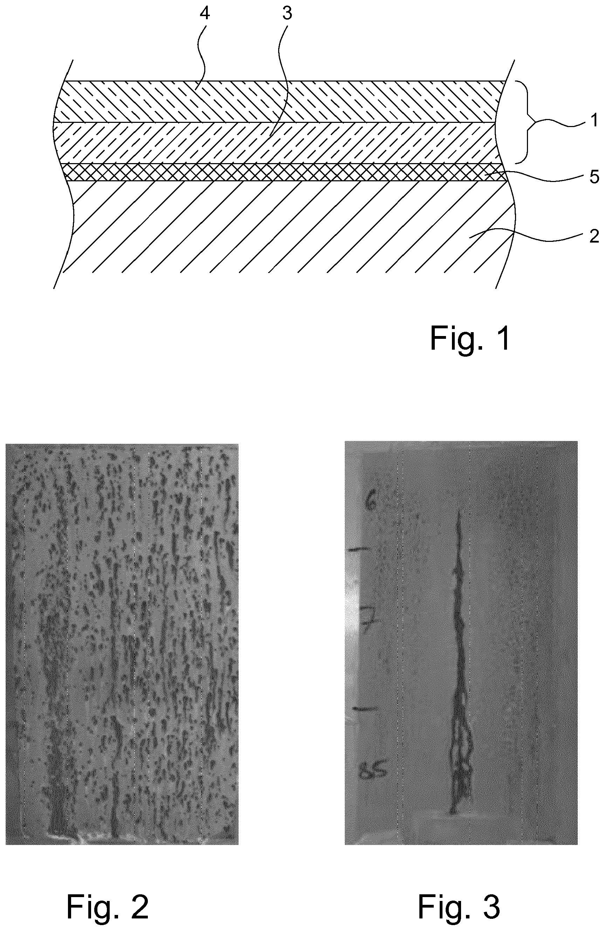

Es zeigt Fig. 1 ein mit einer erfindungsgemäßen Beschichtung 1 versehenes metallisches Substrat 2. Die erfindungsgemäße Beschichtung 1 besteht aus einer kathodischen Korrosionsschutzschicht 3, welche Metallpartikel, insbesondere Zinklamellen, enthält, und einer Sauerstoffbarriereschicht 4, welche vorzugsweise Aluminiumflakes enthält. Die Metallpartikel in der kathodischen Korrosionsschicht 3 sind in eine anorganisch basierte Matrix auf Basis von organisch modifiziertem Siliciumdioxid und Titandioxid eingebettet, wohingegen die Aluminiumflakes der Gaskorrosionsschicht 4 vorzugsweise in eine organisch modifizierte Siliciumdioxidschutzschicht mit einem Kohlenstoffgehalt von weniger als 50 Gew.-%, bezogen auf das Matrixmaterial der Gaskorrosionsschicht 4, eingebettet sind. Optional sind die Beschichtung 1 und das Substrat 2 über eine Haftvermittlerschicht 5 verbunden.

Alternativ oder ergänzend kann gemäß einer nicht in der Fig. 1 gezeigten Ausführungsform zwischen der kathodischen Korrosionsschutzschicht 3 und der Sauerstoffbarriereschicht 4 eine weitere Schicht, insbesondere mit haftvermittelnden und/oder Sauerstoffbarriereeigenschaften, angeordnet sein. Ein mehrlagiger Aufbau der Beschichtung 1 kann insbesondere die Rissbildung bei Erwärmungs- und Abkühlvorgängen bedingt durch Wärmeausdehnung und Schrumpf minimieren.

Die vorliegende Erfindung wird nachfolgend exemplarisch und in nicht beschränkender Weise durch die Ausführungsbeispiele verdeutlicht.

### Ausführungsbeispiele

Für die nachfolgenden Versuche werden Beschichtungssysteme mit kathodischem Korrosionsschutz auf Stahlbleche und Schrauben aufgebracht und im Hinblick auf ihre antikorrosiven Eigenschaften, insbesondere im Anschluss an Temperaturbelastungen untersucht.

Es werden verschiedene Kombinationen kathodischer Korrosionschutzbeschichtungen, nachfolgend auch Basecoat genannt, und Sauerstoffbarrierebeschichtungen, nachfolgend auch Topcoat genannt, untersucht und mit Beschichtungssystemen allein auf Basis kathodischer Korrosionsschutzbeschichtungen verglichen.

### I. Basecoats

Nachfolgend sind die untersuchten Basecoat-Formulierungen sowie ihre Auftrags- und Aushärtungsbedingungen angeben. Weiterhin ist angegeben, ab welchem Zeitpunkt im Salzsprühtest nach DIN EN ISO 9227 ohne vorherige Temperaturbelastung mit dem Auftreten von Rotrost zu rechnen ist.

### Beispiel 1:

Lösemittelbasierter Zinklamellenprimer auf Basis reiner Zinkpigmentierung

| | |
|---|---|
| Applikation: | Spritzen oder Tauchschleudern, |
| Härtung: | thermisch; 30 Minuten bei 200 °C |
| Trockenfilmdicke: | 6 bis 8 µm |

**Tabelle 1: Zusammensetzung Basecoat 1**

| Komponente des Bindemittels | Gewichtsteile |
|---|---|
| Trimethoxyvinylsilan | 9,8 |
| Titan-Ethylhexanolat (Tetra-2-ethylhexyltitanat) | 24,9 |
| n-Butyl-Polytitanat (Titanat-tetrabutanolat, polymer) | 36,8 |
| Alkohol | 14,5 |
| Antiabsetzmittel | 11,4 |
| Netz- und Dispergieradditiv | 2,6 |
| Bindemittel gesamt | 100,0 |
| Zinkflake | 50,00 |
| Rotrost (h Salzsprühtest) | 2000 |

### Beispiel 2:

Wässriger Zinklamellenprimer auf Basis reiner Zinkpigmentierung,

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 2: Zusammensetzung Basecoat 2**

| Komponente des Bindemittels | Gewichtsteile |
|---|---|
| Dipropylenglykol (DPG) | 5,25 |
| Epoxy-Silan-Oligomer | 10,00 |
| Isotridecanol, ethoxyliert | 4,00 |
| 1-Nitropropan | 0,75 |
| Zinkflake (in DPG) | 50,00 |
| demineralisiertes Wasser | 32,00 |
| ortho-Phosphorsäure (0,1 %-ige Lösung) | 3,50 |
| Natronwasserglas (25 %-ige Lösung) | 0,50 |
| Natriumdioctylsulfosuccinat (Netzadditiv) | 0,5 |
| Polyethersiloxan-Copolymer (Entschäumer) | 0,5 |
| Xanthan Gum (Verdicker) | 3,00 |
| Rotrost (h Salzsprühtest) | 2000 |

### Beispiel 3:

Lösemittelbasierter Zinklamellenprimer auf Basis von Zink-Aluminium-Pigmenten (4ZnAl7)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 3: Zusammensetzung Basecoat 3**

| Komponente des Bindemittels | Gewichtsteile |
|---|---|
| Trimethoxyvinylsilan | 9,8 |
| Titan-Ethylhexanolat (Tetra-2-ethylhexyltitanat) | 24,9 |
| n-Butyl-Polytitanat (Titanat-tetrabutanolat, polymer) | 36,8 |
| Alkohol | 14,5 |
| Antiabsetzmittel | 11,4 |
| Netz- und Dispergieradditiv | 2,6 |
| Bindemittel gesamt | 100,0 |
| Zinkflake | 50 |
| Rotrost (h Salzsprühtest) | 2000 |

### Beispiel 4:

Wässriger Zinklamellenprimer auf Basis von Zink-Aluminium-Pigmenten (4ZnAl7)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 4: Zusammensetzung Basecoat 4**

| Komponente des Bindemittels | Gewichtsteile |
|---|---|
| Dipropylenglykol (DPG) | 5,25 |
| Epoxy-Silan-Oligomer | 10,00 |
| Isotridecanol, ethoxyliert | 4,00 |
| 1-Nitropropan | 0,75 |
| Zinkflake (in DPG) | 50,00 |
| demineralisiertes Wasser | 32,00 |
| ortho-Phosphorsäure (0,1 %-ige Lösung) | 3,50 |
| Natronwasserglas 25 %-ige Lösung) | 0,50 |
| Natriumdioctylsulfosuccinat (Netzadditiv) | 0,50 |
| Polyethersiloxan-Copolymer (Entschäumer) | 0,50 |
| Xanthan Gum (Verdicker) | 3,00 |
| Weißrost | ++ |
| Rotrost (Stunden) | 2000 |

### Beispiel 5:

Lösemittelbasierter Zinklamellenprimer auf Basis von Zink-Bismut-Pigmenten (5 Gew.-% Bi)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 5: Zusammensetzung Basecoat 5**

| Komponente des Bindemittels | Gewichtsanteil |
|---|---|
| Trimethoxvinylsilan | 9,80 |
| Titan-Ethylhexanolat (Tetra-2-ethylhexyltitanat) | 24,90 |
| N-Butyl Polytitanat (Titanat-tetrabutanolat, polymer) | 36,80 |
| Alkohol | 14,50 |
| Antiabsetzmittel | 11,40 |
| Netz- und Dispergieradditiv | 2,60 |
| Bindemittel gesamt | 100,00 |
| Zinkflake | 50,00 |
| Rotrost (h Salzsprühtest) | 2000 |

### Beispiel 6:

Wässriger Zinklamellenprimer auf Basis Zink-Bismut-Pigmenten (5 Gew.-% Bi)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 6: Zusammensetzung Basecoat 6**

| Komponente des Bindemittels | Gewichtsanteil |
|---|---|
| Dipropylenglykol (DPG) | 5,25 |
| Epoxy-Silan-Oligomer | 10,00 |
| Isotridecanol, ethoxyliert | 4,00 |
| 1-Nitropropan | 0,75 |
| Zinkflake (in DPG) | 50,00 |
| demineralisiertes Wasser | 32,00 |
| ortho-Phosphorsäure (0,1 %-ige Lösung) | 3,50 |
| Natronwasserglas (25 %-ige Lösung) | 0,50 |
| Natriumdioctylsulfosuccinat (Netzadditiv) | 0,50 |
| Polyethersiloxan-Copolymer (Entschäumer) | 0,50 |
| Xanthan Gum (Verdicker) | 3,00 |
| Rotrost (h Salzsprühtest) | 2000 |

### Beispiel 7:

Lösemittelbasierter Zinklamellenprimer auf Basis von Zink-Aluminium-Magnesium-Pigmenten (ZnMg8Al8)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 7: Zusammensetzung Basecoat 7**

| Komponente des Bindemittels | Gewichtsteile |
|---|---|
| Trimethoxyvinylsilan | 9,80 |
| Titan-Ethylhexanolat (Tetra-2-ethylhexyltitanat) | 24,90 |
| n-Butyl-Polytitanat (Titanat-tetrabutanolat, polymer) | 36,80 |
| Alkohol | 14,50 |
| Antiabsetzmittel | 11,40 |
| Netz- und Dispergieradditiv | 2,60 |
| Bindemittel gesamt | 100,00 |
| Zinkflake | 50,00 |
| Rotrost (h Salzsprühtest) | 2000 |

### Beispiel 8:

Wässriger Zinklamellenprimer auf Basis von Zink-Aluminium-Magnesium-Pigmenten (ZnMg8Al8)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 8: Zusammensetzung Basecoat 8**

| Komponente des Bindemittels | Gewichtsanteil |
|---|---|
| Dipropylenglykol (DPG) | 5,25 |
| Epoxy-Silan-Oligomer | 10,00 |
| Isotridecanol, ethoxyliert | 4,00 |
| 1-Nitropropan | 0,75 |
| Zinkflake (in DPG) | 50,00 |
| demineralisiertes Wasser | 32,00 |
| ortho-Phosphorsäure (0,1 %-ige Lösung) | 3,50 |
| Natronwasserglas (25 %-ige Lösung) | 0,50 |
| Natriumdioctylsulfosuccinat (Netzadditiv) | 0,50 |
| Polyethersiloxan-Copolymer (Entschäumer) | 0,50 |
| Xanthan Gum (Verdicker) | 3,00 |
| Rotrost (Stunden) | 2000 |

### Beispiel 9:

Lösemittelbasierter Zinklamellenprimer auf Basis von Zink-Magnesium-Pigmenten (>5 Gew.-% Mg)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 9: Zusammensetzung Basecoat 9**

| Komponente des Bindemittels | Gewichtsanteil |
|---|---|
| Trimethoxyvinylsilan | 9,80 |
| Titan-Ethylhexanolat (Tetra-2-ethylhexyltitanat) | 24,90 |
| n-Butyl-Polytitanat (Titanat-tetrabutanolat, polymer) | 36,80 |
| Alkohol | 14,50 |
| Antiabsetzmittel | 11,40 |
| Netz- und Dispergieradditiv | 2,60 |
| Bindemittel gesamt | 100,00 |
| Zinkflake | 50,00 |
| Rotrost (h Salzsprühtest) | 2000 |

### Beispiel 10:

Wässriger Zinklamellenprimer auf Basis von Zink-Magnesium-Pigmenten (>5 Gew.-% Mg)

| | |
|---|---|
| Applikation: | Spritzen oder Tauchschleudern |
| Härtung: | thermisch; 30 Minuten bei 200 °C |
| Trockenfilmdicke: | 6 bis 8 µm |

**Tabelle 10: Zusammensetzung Basecoat 10**

| Komponente des Bindemittels | Gewichtsanteil |
|---|---|
| Dipropylenglykol (DPG) | 5,25 |
| Epoxy-Silan-Oligomer | 10,00 |
| Isotridecanol, ethoxyliert | 4,00 |
| 1-Nitropropan | 0,75 |
| Zinkflake (in DPG) | 50,00 |
| demineralisiertes Wasser | 32,00 |
| ortho-Phosphorsäure | |
| (0,1 %-ige Lösung) | 3,50 |
| Natronwasserglas | |
| 25 %-ige Lösung) | 0,50 |
| Natriumdioctylsulfosuccinat (Netzadditiv) | 0,50 |
| Polyethersiloxan-Copolymer (Entschäumer) | 0,50 |
| Xanthan Gum (Verdicker) | 3,00 |
| Rotrost (Stunden) | 2000 |

### Beispiel 11:

Zinklamellenprimer gemäß Beispiel 2 der Basis WO 2009/132102

**Tabelle 11: Zusammensetzung Basecoat 11**

| Komponente des Bindemittels | | Gewichts-% |
|---|---|---|
| Titanat Tyzor TnBT | | 20.8 |
| Zink GTT | | 56.3 |
| Lösemittel M-P-A 4020 X von Elementis | | 1,0 |
| Ethylcellulose N-200 von Ashland | | 0.7 |
| Lösemittelmischung: | | 21.2 |
| Benzylalkohol | 24 Gew.-% | |
| Toluol | 23 Gew.-% | |
| MIBK | 24 Gew.-% | |
| Solvesso 100 | 24 Gew.-% | |
| n-Butanol | 5 Gew.-% | |

### Beispiel 12:

Zinklamellenprimer gemäß Beispiel C1 der WO 2009/132102

**Tabelle 12: Zusammensetzung Basecoat 12**

| Komponente des Bindemittels | Gewichts-% |
|---|---|
| Tyzor TOT von Dorf Ketal | 21.8 |
| (Alkoxytitanat) | |
| MACOL 98 B | 1.1 |
| (Ethylenoxis-Bisphenol A-Addukt) | |
| M-P-A 4020 X | 0.7 |
| Stapa 4ZnAl7 (ZnAl-Pigment) | 51.4 |
| Ethylcellulose N-200 | 0.7 |
| Lösemittelmischung aus Beispiel 11 | 24.3 |

### Beispiel 13:

Zinklamellenprimer gemäß Beispiel 12 mit Zink-Aluminium-Magnesium-Pigment

**Tabelle 13: Zusammensetzung Basecoat 13**

| Komponente des Bindemittels | Gewichts-% |
|---|---|
| Tyzor TOT von Dorf Ketal | 21.8 |
| MACOL 98 B | 1.1 |
| M-P-A 4020 X | 0.7 |
| ZnMgAl-Flake | 51.4 |
| Ethylcellulose N-200 | 0.7 |
| Lösemittelmischung aus Beispiel 11 | 24.3 |

### Beispiel 14:

### Elektrolytisch verzinktes Substrat

Die Zinkschicht wird aus einem saurem Elektrolyten auf EG-Flachstahl abgeschieden. Die Substratdicke mit Zinkauflage beträgt 5 mm.

### Beispiel 15:

Schmelztauchverzinkte Oberfläche mit 10 µm Zinkschichtdicke

### II. Topcoats

In den nachfolgenden Beispielen werden die Formulierungen der verwendeten Topcoats angegeben.

### Beispiele 16 bis 18:

### Topcoats auf wässriger Siloxandispersionsbasis

Topcoat T16 gemäß Beispiel 16 und Topcoat T18 gemäß Beispiel 18 sind ein Klarlacke und enthalten keine Metallpartikel. Topcoat T16 enthält Galsflakes.

Topcoats T17 gemäß Beispiel 17 enthält Aluminiumpigmente.

**Tabelle 14: Zusammensetzung Topcoats T16 bis T18**

| | Gewichtsteile | | |
|---|---|---|---|
| | **T16** | **T17** | **T18** |
| Alkoxy-Methylpolysiloxan zu 50 Gew% in Wasser dispergiert | | 35,00 | |
| Anti Terra 250 | | | |
| (Netz- und Dispergieradditiv) | | 3,30 | |
| Glasflakes 001 | 10,00 | | |
| Decomet 1006/30 (Al-Pigment) | | 10,00 | |
| demineralisiertes Wasser | | 41,70 | 36,70 |
| Optigel-Lsg. | | | |
| (Rheologieadditiv) | 20,00 | 20,00 | |
| Dynasylan Hydrosil 2926 | | | |
| (organofuntionelles Siloxanoligomer) | 35,00 | | 50,00 |
| Lipo | 35,00 | | |
| Levasil 200 B | | | |
| (Kieselsol) | | | 13,30 |
| Byk 349 (Tensid) | | | 0,20 |
| Gesamt | 100,00 | 110,00 | 100,20 |

### Beispiel 19 Topcoat T19

### Topcoat gemäß Beispiel 3 der US 7645404

120 g MTES (Alkyltrialkoxysilan) von Evonik und 40g Tetraethoxysilan werden mit 100 g einer 1%igen Trifluoressigsäurelösung gemischt und die Silane unter Rühren hydrolysiert. Danach werden 150 g einer Lösemittelmischung zugegeben (Butylglycol), 0,2 g Disperbyk 180 und 35 g Aluminiumpigment.

### Beispiel 20 (Topcoat 20)

### Schmelztauchaluminierung mit einer Schichtdicke von 5µm

### III. Anwendungsbeispiele

### Beispiel 21: Basecoat- und Topcoataufbauten im Salzsprühtest nach Wärmebelastung über 48 Stunden bei 400 °C

Unterschiedliche Beschichtungen werden auf alkalisch entfettete und mittels Strahlprozess gereinigte Stahlbleche aus DCO4-Stahl aufgebracht. Der Basecoat wird entsprechend den Beispielen 1 bis 15 aufgebracht und getrocknet. Der Topcoat wird mit 2 bis 4 µm Trockenfilmdicke aufgebracht und bei Raumtemperatur getrocknet.

Anschließend wird einem Ritzstichel ein bis auf das Stahlblech reichender Ritz in der Beschichtung erzeugt und das derart erzeugte Präparat einem Salzsprühtest gemäß DIN EN ISO 9227 unterzogen. In Tabelle 15 sind die im Salzsprühtest ermittelten Zeiten bis zum Rotrost am Ritz zusammengefasst.

**Tabelle 15: Zeit in Stunden bis zum Auftritt von Rotrost am Ritz im Salzsprühtest für verschieden Beschichtungssysteme nach vorangegangener Temperaturbelastung von 400°C über 48 Stunden**

| Basecoat aus Beispiel | Kein Topcoat | T16 | T17 | T18 |
|---|---|---|---|---|
| | | (Vergleich) | (erfindungsgemäß) | (Vergleich) |
| 1 | <<0h | <<50h | <100h | <<50h |
| 2 | <<50h | <<50h | <100h | <<50h |
| 3 | <<10h | <<10h | >200h | <<10h |
| 4 | <<100h | <<100h | >200h | <<100h |
| 5 | <<100h | <<100h | >200h | <<100h |
| 6 | <<100h | <<100h | >200h | <<100h |
| 7 | <<150h | <<100h | >>200h | <<100h |
| 8 | <<150h | <<100h | >>200h | <<100h |
| 9 | <<100h | <<100h | >200h | <<100h |
| 10 | <<100h | <<100h | >200h | <<100h |
| 11 | <50h | <<100h | >200h | <<100h |
| 12 | <50h | <<100h | >200h | <<100h |
| 13 | <150h | <<100h | >>200h | <<100h |
| 14 | <100h | <<100h | >200h | <<100h |
| 15 | <100h | <<100h | >200h | <<100h |

In den Figurendarstellungen 2 und 3 ist der Einfluss des Basecoats auf die Temperaturbeständigkeit der kathodischen Korrosionsschutzwirkung, wie er auch aus Tabelle 15 zu ersehen ist, nochmals bildlich dargestellt.

Es zeigt Fig. 2 ein mit dem Basecoat gemäß Beispiel 11, d. h. mit einem Zinklamellenüberzug mit Lamellen auf Basis reinen Zinks, versehenes Stahlblech im Anschluss an einen Salzsprühtest gemäß DIN EN ISO 9227 nach einer Testdauer von 24 Stunden. Das beschichtete Stahlblech wurde einer Temperaturbelastung von 400°C über 48 Stunden ausgesetzt. Nach 24 Stunden im Salzsprühtest zeigt sich bereits eine deutliche Rotrostbildung sowohl am Ritz als auch in der Fläche des Stahlblechs

Es zeigt Fig. 3 ein mit dem Basecoat gemäß Beispiel 7, d. h. einem Zinklamellenüberzug mit Lamellen auf Basis einer Zink-Aluminium-Magnesium-Legierung, versehenes Stahlblech im Anschluss an einen Salzsprühtest gemäß DIN EN ISO 9227 nach einer Testdauer von 72 Stunden. Das beschichtete Stahlblech wurde gleichfalls einer Temperaturbelastung von 400°C über 48 Stunden ausgesetzt. Erst nach 72 Stunden im Salzsprühtest zeigen sich eine deutliche Rotrostbildung am Ritz sowie auch erste Rotroststellen in der Fläche des beschichteten Stahlblechs.

Die Daten in Tabelle und die Figuren 2 und 3 belegen eindrucksvoll, dass mit durch die Verwendung Zinklamellen auf Basis von Zinklegierungen, insbesondere Zink-Aluminium-Magnesium-Legierungen, gegenüber Zinklamellenüberzügen mit Lamellen auf Basis reinen Zinks eine deutliche Verbesserung der Temperaturbeständigkeit des kathodischen Korrosionsschutzes erzielt werden kann.

### Beispiel 22: Vergleichende Korrosionsprüfung über unterschiedliche Temperaturen

Unterschiedliche Basecoatsysteme werden wie zuvor beschrieben auf Stahlbleche und durch Tauchschleudern auf Schrauben aufgebracht. Die Dicke des getrockneten bzw. gehärteten Basecoats beträgt 5 bis 8 µm. Anschließend wird auf einen Teil der Substrate ein Topcoat mit einer Schichtdicke von 2 bis 4 µm aufgebracht und das Beschichtungssystem über einen definierten Zeitraum einer erhöhten Temperatur ausgesetzt. Die Korrosionsbeständigkeit der Beschichtungen wird nachfolgend für Stahlbleche in einem Salzsprühtest am Ritz gemäß DIN EN ISO 9227 und für Schrauben in einem Salzsprühtest ohne Ritz in Anlehnung an DIN EN ISO 9227 evaluiert.

Die Temperaturbelastung der Substrate beträgt 450 °C über 48 Stunden, 500 °C über 48 Stunden und und 300 °C über 30 Tage. Die Ergebnisse der vergleichenden Korrosionsprüfung sind in der nachfolgenden Tabelle 16 jeweils mit Referenz auf die Topcoat-freien Systeme angegeben.

Die Ergebnisse der Tests werden in Tabelle 16 wie folgt bewertet:
+++ In allen drei Tests bei erhöhten Temperaturen wird im Salzsprühtest mindestens die doppelte Zeitdauer bis zur Bildung von Rotrost am Ritz im Vergleich zu nur mit einem Basecoat auf Basis eines reinen Zinklamellenüberzugs beschichteten Substrate beobachtet.
++ In zwei Tests bei erhöhten Temperaturen wird im Salzsprühtest mindestens die doppelte Zeitdauer bis zur Bildung von Rotrost am Ritz im Vergleich zu nur mit einem Basecoat auf Basis eines reinen Zinklamellenüberzugs beschichteten Substrate beobachtet.
+ In einem Test bei erhöhter Temperatur wird im Salzsprühtest mindestens die doppelte Zeitdauer bis zur Bildung von Rotrost am Ritz im Vergleich zu nur mit einem Basecoat auf Basis eines reinen Zinklamellenüberzugs beschichteten Substrate beobachtet.
- Graduelle Verbesserung der Temperaturbeständigkeit des Korrosionsschutzes im Salzsprühtest gegenüber einem Basecoat auf Basis eines reinen Zinklamellenüberzugs.
-- Keine Verbesserung gegenüber einem Basecoat auf Basis eines reinen Zinklamellenüberzugs.

**Tabelle 16: Vergleichende Korrosionsprüfung verschiedener Beschichtungssysteme über 3 unterschiedliche Temperaturbelastungen mit Bezug auf die jeweiligen Topcoat-freien Systeme**

| **Basecoat gemäß Beispiel** | **Kein** | **T16** | **T17** | **T18** | **T19** | **T20** |
|---|---|---|---|---|---|---|
| | **Topcoat** | (Vergleich) | (erfindungsgemäß) | (Vergleich) | (erfindungsgemäß) | (Vergleich) |
| 1 | -- | -- | + | -- | + | + |
| 2 | -- | -- | + | -- | + | + |
| 3 | -- | -- | + | -- | + | + |
| 4 | -- | -- | + | -- | + | + |
| 5 | -- | -- | ++ | - | + | + |
| 6 | -- | -- | ++ | - | + | ++ |
| 7 | -- | -- | +++ | - | +++ | +++ |
| 8 | -- | -- | +++ | - | +++ | +++ |
| 9 | + | ++ | ++ | ++ | ++ | ++ |
| 10 | + | ++ | ++ | ++ | ++ | ++ |
| 11 | -- | -- | + | -- | + | + |
| 12 | + | ++ | + | ++ | + | ++ |
| 13 | + | ++ | +++ | ++ | ++ | ++ |
| 14 | -- | -- | + | -- | + | ++ |
| 15 | -- | -- | + | -- | + | ++ |

### Beispiel 23: Vergleich von Beschichtungssystemen mit und ohne Sauerstoffbarriereschicht (Topcoat)

### A) Beschichtung von Schrauben

Der Basecoat gemäß Beispiel 7 wird mit einer Trockenfilmdicke von 6 bis 8 µm auf Stahlschrauben durch Tauchschleudern aufgetragen. Ein Teil der beschichteten Substrate wird mit der Aluminiumpigmente enthaltenden Topcoatzusammensetzung T17 gemäß Beispiel 17 mit einer Schichtdicke von 2 bis 4 µm beschichtet und bei Raumtemperatur getrocknet. Die beschichteten Bleche werden erhöhten Temperaturen zwischen 300 und 500 °C ausgesetzt und die Korrosionsbeständigkeit anschließend im Salzsprühtest ohne Ritz in Anlehnung an DIN EN ISO 9227 evaluiert. Die Ergebnisse sind in der nachfolgenden Tabelle 17 zusammengestellt.

**Tabelle 17: Korrosionsbeständigkeit von beschichteten Stahlschrauben mit und ohne Topcoat; Zeit im Salzsprühtest bis zum Auftritt von Rotrost**

| Temperaturbelastung | | | | | | |
|---|---|---|---|---|---|---|
| Temperatur [°C] | RT | 300 | 300 | 300 | 400 | 500 |
| Zeit [h] | | 240 | 480 | 720 | 48 | 48 |

| Salzsprühtest | | | | | | |
|---|---|---|---|---|---|---|
| ohne Topcoat [h] | 1.700 | 700 | 100 | < 100 | 72 | 64 |
| mit Topcoat [h] | > 2.500 | >> 800 | > 600 | > 600 | 260 | 230 |

### B) Beschichtung von Stahlblechen

Der Basecoat gemäß Beispiel 7 wird mit einer Trockenfilmdicke von 6 bis 8 µm auf Stahlbleche aufgetragen. Ein Teil der beschichteten Substrate wird mit der Topcoatzusammensetzung T17 gemäß Beispiel 17 mit einer Schichtdicke von 2 bis 4 µm beschichtet und bei Raumtemperatur getrocknet. Die beschichteten Bleche werden erhöhten Temperaturen zwischen 300 und 500 °C ausgesetzt und die Korrosionsbeständigkeit anschließend im Salzsprühtest am Ritz gemäß DIN EN ISO 9227 evaluiert. Die Ergebnisse sind in der nachfolgenden Tabelle 18 zusammengestellt.

**Tabelle 18: Korrosionsbeständigkeit von beschichteten Stahlblechen mit und ohne Topcoat; Zeit im Salzsprühtest bis zum Auftritt von Rotrost**

| Temperaturbelastung | | | | | | |
|---|---|---|---|---|---|---|
| Temperatur [°C] | RT | 300 | 300 | 300 | 400 | 500 |
| Zeit [h] | | 240 | 480 | 720 | 48 | 48 |

| Salzsprühtest | | | | | | |
|---|---|---|---|---|---|---|
| ohne Topcoat [h] | 2450 | 700 | 400 | 300 | 72 | 72 |
| mit Topcoat [h] | 950 | >> 800 | >> 800 | >>800 | >230 | >230 |

Die in Tabelle 16 zusammengestellten Werte sind für Messungen nach einer vorangehenden Temperaturbelastung von 400°C und 500°C nochmals bildlich in den Fig. 3 bis 6 dargestellt.

Es zeigt Fig. 3 - wie zuvor ausgeführt - ein mit dem Basecoat gemäß Beispiel 7 versehenes Stahlblech im Anschluss an einen Salzsprühtest gemäß DIN EN ISO 9227 nach einer Testdauer von 72 Stunden. Das beschichtete Stahlblech wurde vor Durchführung des Salzsprühtests einer Temperaturbelastung von 400°C über 48 Stunden ausgesetzt. Nach 72 Stunden zeigen sich eine deutliche Rotrostbildung am Ritz sowie auch erste Rotroststellen in der Fläche des beschichteten Stahlblechs.

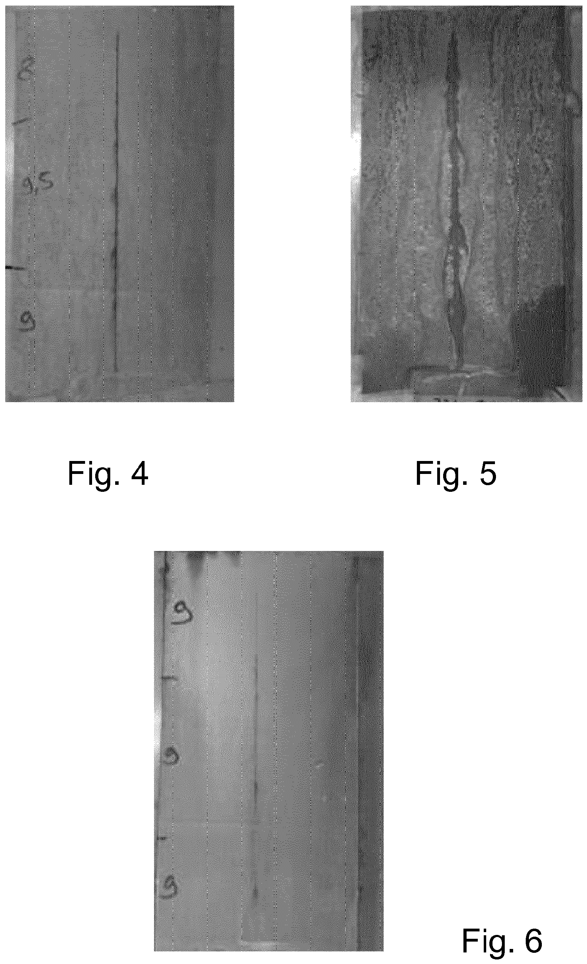

Es zeigt Fig. 4 ein mit dem Basecoat gemäß Beispiel 7 sowie der TopcoatZusammensetzung T17 gemäß Beispiel 17 beschichtetes Stahlblech im Anschluss an ein Salzsprühtest gemäß DIN EN ISO 9227 nach einer Testdauer von mehr als 230 Stunden. Das beschichtete Stahlblech wurde gleichfalls einer Temperaturbelastung von 400°C über 48 Stunden ausgesetzt. Nach über 230 Stunden im Salzsprühtest zeigt sich erster Rotrost am Ritz, während in der Fläche noch keine Rostbildung zu erkennen ist.

Es zeigt Fig. 5 ein mit dem Basecoat gemäß Beispiel 7 beschichtetes Stahlblech nach Durchführung eines Salzsprühtests gemäß DIN EN ISO 9227 nach einer Testdauer von 72 Stunden. Das Stahlblech wurde einer Temperaturbelastung von 500°C über 48 Stunden ausgesetzt. Es zeigt sich sowohl am Ritz als auch in der Fläche ein starker Befall mit Rotrost.

Schließlich zeigt Fig. 6 ein mit dem Basecoat gemäß Beispiel 7 sowie der TopcoatZusammensetzung T17 gemäß Beispiel 17 beschichtetes Stahlblech im Anschluss an ein Salzsprühtest gemäß DIN EN ISO 9227 nach einer Testdauer mehr als 230 Stunden. Das beschichtete Stahlblech wurde einer Temperaturbelastung von 500°C über 48 Stunden ausgesetzt. Wie aus Fig. 7 ersichtlich ist, zeigen sich selbst nach über 230 Stunden im Salzsprühtest eine nur äußerst schwache Rotrostbildung am Ritz und keinerlei Rotrost in der Fläche.

Die Messwerte in den Tabellen 17 und 18 sowie die Figurendarstellung belegen eindrucksvoll, dass einerseits durch die Verwendung von Zinklamellenbeschichtungen auf Basis von Zink-Aluminium-Magnesium-Legierungen im Vergleich zu Zinklamellenbeschichtungen auf Basis reinen Zinks ein deutlich verbesserter Korrosionsschutz bei erhöhter Temperatur erzielt werden und andererseits der Korrosionsschutz bei erhöhter Temperatur durch eine Sauerstoffbarrierebeschichtung nochmals drastisch erhöht werden kann. Erstaunlicherweise gilt dies nicht nur für Bleche, sondern auch für Schrauben, welche aufgrund des Gewindes ungleich schwieriger gleichmäßig zu beschichten und vor Korrosion zu schützen sind.

**Bezugszeichenliste:**

| | | | |
|---|---|---|---|
| 1 | Korrosionsschutzbeschichtung | 4 | Sauerstoffbarriereschicht |
| 2 | Substrat | 5 | Haftvermittlerschicht |
| 3 | Kathodische Korrosionsschutzschicht | | |

## Patentansprüche

1. Beschichtung (1), insbesondere Hochtemperatur-Korrosionsschutzbeschichtung, zur Erzeugung eines kathodischen Hochtemperatur-Korrosionsschutzes auf einem metallischen Substrat (2), aufweisend mindestens zwei Schichten,
**gekennzeichnet durch,**
(a) eine erste Schicht (3) in Form einer kathodischen Korrosionsschutzbeschichtung, wobei die erste Schicht (3)
(i) auf Basis einer **durch** Elektrolyse oder Feuerverzinkung aufgebrachten Zinkschicht ausgebildet ist oder
(ii) auf Basis mindestens einer Metallpartikel enthaltenden anorganisch basierten Matrix ausgebildet ist, wobei die erste Schicht (3) einen Anteil an Metallpartikeln im Bereich von 50 bis 95 Gew.-%, bezogen auf die erste Schicht, aufweist, wobei die anorganisch basierte Matrix Oxide des Siliciums, Titans und/oder Zirkoniums enthält, wobei die Matrix mittels organischer Reste modifiziert ist, wobei die anorganisch basierte Matrix **durch** Kondensationsreaktionen anorganischer oder organischer Gruppen und/oder Polymerisations-reaktionen organischer Gruppen aus Silanen, Polysilanen, Silanhydrolysaten, Polysiloxanen, Silikonaten, Titanaten, Polytitanaten, Zirkonaten und deren Mischungen erhältlich ist,
und
(b) eine zweite Schicht (4) in Form einer weiteren Korrosionsschutzbeschichtung in Form einer Sauerstoffbarrierebeschichtung, wobei die zweite Schicht (4) eine anorganisch basierte Matrix aufweist, wobei die anorganisch basierte Matrix **durch** Oxide des Siliciums, Titans und/oder Zirkoniums gebildet wird, wobei die zweite Schicht (4) Metallpartikel enthält, wobei die zweite Schicht (4) einen Anteil an Metallpartikeln im Bereich von 35 bis 95 Vol.-%, bezogen auf die zweite Schicht, aufweist und wobei die Metallpartikel Aluminiumpartikel sind.

2. Beschichtung nach Anspruch 1, **dadurch gekennzeichnet, dass** die Beschichtung eine Schichtdicke im Bereich von 0,5 bis 200 µm, insbesondere 1 bis 180 µm, vorzugsweise 2 bis 15 µm, bevorzugt 3 bis 120 µm, besonders bevorzugt 4 bis 100 µm, aufweist.

3. Beschichtung nach Anspruch 1 oder 2, **dadurch gekennzeichnet, dass** die erste Schicht (3) eine Schichtdicke im Bereich von 0,1 bis 180 µm, insbesondere 0,5 bis 160 µm, vorzugsweise 1 bis 140 µm, bevorzugt 2 bis 110 µm, besonders bevorzugt 3 bis 90 µm, aufweist.

4. Beschichtung nach Anspruch 3, **dadurch gekennzeichnet, dass** zumindest ein Teil der Metallpartikel der ersten Schicht Zink und/oder Zinklegierungen enthält.

5. Beschichtung nach Anspruch 4, **dadurch gekennzeichnet,**
**dass** die erste Schicht (3) mindestens 60 Gew.-%, vorzugsweise mindestens 70 Gew.-%, Metallpartikel, bezogen auf die erste Schicht, aufweist und/oder
**dass** die erste Schicht (3) einen Anteil an Metallpartikeln im Bereich von 60 bis 95 Gew.-%, vorzugsweise 70 bis 90 Gew.-%, bezogen auf die erste Schicht, aufweist.

6. Beschichtung nach Anspruch 4 oder 5, **dadurch gekennzeichnet, dass** die Metallpartikel auf Basis reinen Zinks und/oder Zinklegierungen ausgebildet sind, insbesondere wobei die Zinklegierungen ausgewählt sind aus Zink-Bismut-Legierungen, Zink-AluminiumLegierungen und/oder Zink-Aluminium-Magnesium-Legierungen, insbesondere Zink-Aluminium-Legierungen und/oder Zink-Aluminium-Magnesium-Legierungen, vorzugsweise Zink-Aluminium-Magnesium-Legierungen, und/oder insbesondere wobei die erste Schicht (3) Zinklamellen als plättchenförmige Metallpartikel enthält, insbesondere wobei die Zinklamellen ausgewählt sind aus reinem Zink und/oder Zinklegierungen.

7. Beschichtung nach einem der vorangehenden Ansprüche, **dadurch gekennzeichnet, dass** die anorganisch basierte Matrix der ersten Schicht (3) Siliciumdioxid und/oder Titandioxid enthält oder insbesondere zumindest im Wesentlichen hieraus besteht.

8. Beschichtung nach einem der vorangehenden Ansprüche, **dadurch gekennzeichnet, dass** die anorganisch basierte Matrix der zweiten Schicht (4) durch Siliciumdioxid und/oder Titandioxid, bevorzugt durch Siliciumdioxid gebildet wird.

9. Beschichtung nach Anspruch 8, **dadurch gekennzeichnet, dass** die anorganisch basierte Matrix eine Kohlenstoffgehalt im Bereich 0,1 bis 30 Gew.-%, bezogen auf die anorganisch basierte Matrix, aufweist.

10. Verfahren zur Herstellung einer Hochtemperaturkorrosionsbeschichtung nach einem der Ansprüche 1 bis 9 auf einem metallischen Substrat,
**dadurch gekennzeichnet,**
**dass**
(A) in einem ersten Verfahrensschritt eine Korrosionsschutz-beschichtung und/oder eine Beschichtungszusammensetzung zur Herstellung einer kathodischen Korrosionsschutzschicht auf das metallische Substrat aufgebracht wird, so dass eine kathodische Korrosionsschutzschicht erhalten wird, und wobei die erste Schicht (3)
(i) auf Basis einer durch Elektrolyse oder Feuerverzinkung aufgebrachten Zinkschicht ausgebildet ist oder
(ii) auf Basis mindestens einer Metallpartikel enthaltenden anorganisch basierten Matrix ausgebildet ist, wobei die erste Schicht (3) einen Anteil an Metallpartikeln im Bereich von 50 bis 95 Gew.-%, bezogen auf die erste Schicht, aufweist, und wobei die anorganisch basierte Matrix Oxide des Siliciums, Titans und/oder Zirkoniums enthält, wobei die Matrix mittels organischer Reste modifiziert ist, wobei die anorganisch basierte Matrix durch Kondensationsreaktionen anorganischer oder organischer Gruppen und/oder Polymerisationsreaktionen organischer Gruppen aus Silanen, Polysilanen, Silanhydrolysaten, Polysiloxanen, Silikonaten, Titanaten, Polytitanaten, Zirkonaten und deren Mischungen erhältlich ist,
(B) in einem nachfolgenden zweiten Verfahrensschritt eine Korrosionsschutzbeschichtung zur Herstellung einer Sauerstoffbarriereschicht auf die kathodische Korrosionsschutz-schicht aufgebracht wird, wobei die zweite Schicht (4) eine anorganisch basierte Matrix aufweist, wobei die anorganisch basierte Matrix durch Oxide des Siliciums, Titans und/oder Zirkoniums gebildet wird, wobei die zweite Schicht (4) Metallpartikel, wobei die zweite Schicht einen Anteil an Metallpartikeln im Bereich von 35 bis 95 Vol.-%, aufweist und wobei die Metallpartikel Aluminiumpartikel sind.

## Claims

1. Coating (1), more particularly high-temperature corrosion control coating, for generating cathodic high-temperature corrosion protection on a metallic substrate (2), comprising at least two layers,
**characterized by**,
(a) a first layer (3) in the form of a cathodic corrosion control coating, wherein the first layer (3)
(i) is formed based on a zinc layer applied by electrolysis or hot-dip galvanizing or
(ii) is formed based on at least one inorganically based matrix containing metal particles, wherein the first layer (3) has a fraction of metal particles in the range of 50 to 95 wt%, based on the first layer, wherein the inorganically based matrix comprises oxides of silicon, titanium and/or zirconium, wherein the matrix is modified with organic radicals, wherein the inorganically based matrix is obtainable by condensation reactions of inorganic or organic groups and/or polymerization reactions of organic groups from silanes, polysilanes, silane hydrolysates, polysiloxanes, siliconates, titanates, polytitanates, zirconates and mixtures thereof,
and
(b) a second layer (4) in the form of a further corrosion control coating in the form of an oxygen barrier coating, wherein the second layer (4) comprises an inorganically based matrix, wherein the inorganically based matrix is formed by oxides of silicon, titanium and/or zirconium, wherein the second layer (4) comprises metal particles, wherein the second layer (4) has a fraction of metal particles in the range of 35 to 95 vol%, based on the second layer, and wherein the metal particles are aluminum particles.

2. Coating according to Claim 1, **characterized in that** the coating has a layer thickness in the range from 0.5 to 200 µm, more particularly 1 to 180 µm, preferably 2 to 15 µm, more preferably 3 to 120 µm, very preferably 4 to 100 µm.

3. Coating according to Claim 1 or 2, **characterized in that** the first layer (3) has a layer thickness in the range from 0.1 to 180 µm, more particularly 0.5 to 160 µm, preferably 1 to 140 µm, more preferably 2 to 110 µm, very preferably 3 to 90 µm.

4. Coating according to Claim 3, **characterized in that** at least a part of the metal particles of the first layer comprises zinc and/or zinc alloys.

5. Coating according to Claim 4, **characterized in that**
the first layer (3) comprises at least 60 wt%, preferably at least 70 wt%, of metal particles, based on the first layer, and/or
**in that** the first layer (3) has a fraction of metal particles in the range from 60 to 95 wt%, preferably 70 to 90 wt%, based on the first layer.

6. Coating according to Claim 4 or 5, **characterized in that** the metal particles are formed on the basis of pure zinc and/or zinc alloys, in particular where the zinc alloys are selected from zinc-bismuth alloys, zinc-aluminium alloys and/or zinc-aluminium-magnesium alloys, more particularly zinc-aluminium alloys and/or zinc-aluminium-magnesium alloys, preferably zinc-aluminium-magnesium alloys, and/or in particular where the first layer (3) comprises zinc lamellae as platelet-shaped metal particles, in particular where the zinc lamellae are selected from pure zinc and/or zinc alloys.

7. Coating according to any of the preceding claims, **characterized in that** the inorganically based matrix of the first layer (3) comprises silicon dioxide and/or titanium dioxide, or more particularly consists at least substantially thereof.

8. Coating according to any of the preceding claims, **characterized in that** the inorganically based matrix of the second layer (4) is formed by silicon dioxide and/or titanium dioxide, more preferably by silicon dioxide.

9. Coating according to Claim 8, **characterized in that** the inorganically based matrix has a carbon content in the range from 0.1 to 30 wt%, based on the inorganically based matrix.

10. Method for producing a high-temperature corrosion coating according to one of Claims 1 to 9 on a metallic substrate,
**characterized in that**
(A) in a first method step, a corrosion control coating and/or a coating composition for producing a cathodic corrosion control layer is applied to the metallic substrate, to give a cathodic corrosion control layer, and wherein the first layer (3)
(i) is formed based on a zinc layer applied by electrolysis or hot-dip galvanizing or
(ii) is formed based on at least one inorganically based matrix containing metal particles, wherein the first layer (3) has a fraction of metal particles in the range of 50 to 95 wt%, based on the first layer, wherein the inorganically based matrix comprises oxides of silicon, titanium and/or zirconium, wherein the matrix is modified with organic radicals, wherein the inorganically based matrix is obtainable by condensation reactions of inorganic or organic groups and/or polymerization reactions of organic groups from silanes, polysilanes, silane hydrolysates, polysiloxanes, siliconates, titanates, polytitanates, zirconates and mixtures thereof,
(B) in a subsequent second method step, a corrosion control coating for producing an oxygen barrier layer is applied to the cathodic corrosion control layer, wherein the second layer (4) comprises an inorganically based matrix, wherein the inorganically based matrix is formed by oxides of silicon, titanium and/or zirconium, wherein the second layer (4) comprises metal particles, wherein the second layer (4) has a fraction of metal particles in the range of 35 to 95 vol%, based on the second layer, and wherein the metal particles are aluminum particles.

## Revendications

1. Revêtement (1), en particulier revêtement de protection contre la corrosion à haute température, pour la réalisation d'une protection cathodique contre la corrosion à haute température sur un substrat métallique (2), comportant au moins deux couches, **caractérisé par**
(a) une première couche (3) sous la forme d'un revêtement de protection cathodique contre la corrosion, la première couche (3)
(i) étant formée à partir d'une couche de zinc appliquée par électrolyse ou galvanisation à chaud ou
(ii) étant formée à partir d'au moins une matrice à base inorganique contenant des particules métalliques, la première couche (3) présentant une proportion de particules métalliques dans la plage de 50 à 95 % en poids par rapport à la première couche, la matrice à base inorganique contenant des oxydes de silicium, de titane et/ou de zirconium, la matrice étant modifiée au moyen de résidus organiques, la matrice à base inorganique étant obtenue par des réactions de condensation de groupes inorganiques ou organiques et/ou des réactions de polymérisation de groupes organiques constitués de silanes, de polysilanes, d'hydrolysats de silane, de polysiloxanes, de siliconates, de titanates, de polytitanates, de zirconates et de leurs mélanges,
et
(b) une deuxième couche (4) sous la forme d'un autre revêtement de protection contre la corrosion sous la forme d'un revêtement barrière à l'oxygène, la deuxième couche (4) présentant une matrice à base inorganique, la matrice à base inorganique étant formée par des oxydes de silicium, de titane et/ou de zirconium, la seconde couche (4) contenant des particules métalliques, la seconde couche (4) présentant une proportion de particules métalliques dans la plage de 35 à 95 % en volume par rapport à la seconde couche, et les particules métalliques étant des particules d'aluminium.

2. Revêtement selon la revendication 1, **caractérisé en ce que** le revêtement présente une épaisseur de couche dans la plage de 0,5 à 200 µm, en particulier de 1 à 180 µm, de préférence de 2 à 15 µm, préférablement de 3 à 120 µm, encore plus préférablement de 4 à 100 µm.

3. Revêtement selon la revendication 1 ou 2, **caractérisée en ce que** la première couche (3) présente une épaisseur de couche dans la plage de 0,1 à 180 µm, en particulier de 0,5 à 160 µm, de préférence de 1 à 140 µm, préférablement de 2 à 110 µm, encore plus préférablement de 3 à 90 µm.

4. Revêtement selon la revendication 3, **caractérisé en ce qu'**au moins certaines des particules métalliques de la première couche contiennent du zinc et/ou des alliages de zinc.

5. Revêtement selon la revendication 4, **caractérisé en ce que**
la première couche (3) présente au moins 60 % en poids, de préférence au moins 70 % en poids, de particules métalliques, par rapport à la première couche, et/ou
**en ce que** la première couche (3) présente une proportion de particules métalliques dans la plage de 60 à 95 % en poids, de préférence de 70 à 90 % en poids, par rapport à la première couche.

6. Revêtement selon la revendication 4 ou 5, **caractérisé en ce que** les particules métalliques sont à base de zinc pur et/ou d'alliages de zinc, les alliages de zinc étant particulièrement choisis parmi les alliages zinc-bismuth, les alliages zinc-aluminium et/ou les alliages zinc-aluminium-magnésium, en particulier les alliages zinc-aluminium et/ou les alliages zinc-aluminium-magnésium, de préférence les alliages zinc-aluminium-magnésium, et/ou la première couche (3) contenant en particulier du zinc lamellaire sous forme de particules métalliques en forme de plaquettes, le zinc lamellaire étant en particulier choisi parmi le zinc pur et/ou les alliages de zinc.

7. Revêtement selon l'une des revendications précédentes, **caractérisé en ce que** la matrice à base inorganique de la première couche (3) contient du dioxyde de silicium et/ou du dioxyde de titane ou est en particulier au moins essentiellement constituée de ceux-ci.

8. Revêtement selon l'une des revendications précédentes, **caractérisé en ce que** la matrice à base inorganique de la seconde couche (4) est formée de dioxyde de silicium et/ou de dioxyde de titane, de préférence de dioxyde de silicium.

9. Revêtement selon la revendication 8, **caractérisé en ce que** la matrice à base inorganique présente une teneur en carbone dans la plage de 0,1 à 30 % en poids par rapport à la matrice à base inorganique.

10. Procédé de réalisation d'un revêtement de protection contre la corrosion à haute température selon l'une des revendications 1 à 9 sur un substrat métallique,
**caractérisé en ce que**
(A) au cours une première étape du procédé, un revêtement de protection contre la corrosion et/ou une composition de revêtement pour produire une couche de protection cathodique contre la corrosion est appliqué sur le substrat métallique, de sorte qu'une couche de protection cathodique contre la corrosion est obtenue, la première couche (3)
(i) étant formée à partir d'une couche de zinc appliquée par électrolyse ou galvanisation à chaud ou
(ii) étant formée à base d'au moins une matrice à base inorganique contenant des particules métalliques, la première couche (3) présentant une proportion de particules métalliques dans la plage de 50 à 95 % en poids par rapport à la première couche, et la matrice à base inorganique contenant des oxydes de silicium, de titane et/ou de zirconium, la matrice étant modifiée au moyen de résidus organiques, la matrice à base inorganique étant obtenue par des réactions de condensation de groupes inorganiques ou organiques et/ou des réactions de polymérisation de groupes organiques constitués de silanes, de polysilanes, d'hydrolysats de silane, de polysiloxanes, de siliconates, de titanates, de polytitanates, de zirconates et de leurs mélanges,
(B) au cours d'une deuxième étape subséquente du procédé, un revêtement de protection contre la corrosion est appliqué sur la couche de protection cathodique contre la corrosion pour obtenir un revêtement barrière à l'oxygène, la seconde couche (4) présentant une matrice à base inorganique, la matrice à base inorganique étant formée par des oxydes de silicium, de titane et/ou de zirconium, la seconde couche (4) contenant des particules métalliques, la seconde couche présentant une proportion de particules métalliques dans la plage de 35 à 95 % en volume, et les particules métalliques étant des particules d'aluminium.
